# EUROPEAN PATENT APPLICATION

(11) **EP 1 755 289 A1**
(43) Date of publication of application: **21.02.2007**
(21) Application number: 05751591.8
(22) Date of filing: 06.06.2005
(51) Int. Cl.: H04L 12/56, H04L 12/28

(54) **ROUTER DEVICE, COMMUNICATION DEVICE, ROUTING METHOD, ROUTING PROGRAM, AND COMPUTER-READABLE RECORDING MEDIUM WHERE ROUTING PROGRAM IS RECORDED**

(30) Priority: 11.06.2004 JP 2004173501
(71) Applicant: MATSUSHITA ELECTRIC INDUSTRIAL CO., LTD., Osaka 571-8501 (JP)
(72) Inventor: TSUSHIMA, Tsunehito c/o Matsushita El.Ind.Co.Ltd., Chuo-ku, Osaka-shi, Osaka 540-6319 (JP); SHINTANI, Yasuyuki c/o Matsushita El.In.Co.Ltd., Chuo-ku, Osaka-shi, Osaka 540-6319 (JP); MURAKAMI, Takashi c/o Matsushita El.Ind.Co.Ltd., Chuo-ku, Osaka-shi, Osaka 540-6319 (JP)
(74) Representative: TBK-Patent
(86) International application number: PCT/JP2005/010375
(87) International publication number: WO 2005/122503

(57) **Abstract**

The invention provides a router device, a communication device, a routing method, a routing program, and a computer-readable recording medium recorded with the routing program that enable to improve communication efficiency. The communication data receiving section 10 receives communication data from the high-speed transmission medium 2. The communication data storage 11 stores the received communication data therein. The communication data sending section 12 sends the communication data to the low-speed transmission medium 3. The communication data temporal storage 13 temporarily stores the communication data sent from the communication data sending section 12 therein. The destination comparing section 14 compares the destination of the communication data stored in the communication data storage 11 with the destination of the communication data stored in the communication data temporal storage 13. The communication data transmission controlling section 15 designates the communication data sending section 12 to send the communication data stored in the communication data storage 11 if a comparison result by the destination comparing section 14 indicates destination matching or if no communication data is stored in the communication data temporal storage 13. The communication data erasing section 16 erases the transmitted communication data from the communication data storage 11.

## Description

### TECHNICAL FIELD

The present invention relates to a router device for relaying communication data between a plurality of subnets connected by transmission media having different transmission rates, and a method for sequentially transmitting communication data to be relayed.

### BACKGROUND ART

A router device performs routing with use of routing information that has been collected and held in correspondence to individual destinations of communication data. In the case where data is sent from a subnet using a high-speed transmission medium and is received by a subnet using a low-speed transmission medium, even if the router device has to process a plurality of communication data intensively in a short period, the routing is carried out for each of the communication data. Specifically, even if the router device receives a plurality of communication data to be sent to the same destination in a short period intensively, routing, establishing a communication link, releasing a communication link, and the like have to be carried out for each of the communication data, which increases a processing load to the router device.

In view of the above, Japanese Unexamined Patent Publication No. 1-241243 (D1) proposes an approach of reducing a load to a routing control to be implemented by a router device by reducing the number of packets by unifying the packets.

In network physical media, maximum transfer unit (MTU) is defined with respect to each of the physical media. MTU represents a maximal size (octet order) transferable as a packet. In the case where the size of MTU of a physical medium on a route for transmitting a packet is smaller than the size of the packet to be transmitted, a network relay device discards the packet to be transmitted, or sends the packet after fragmenting the packet into data of an appropriate size depending on the MTU size. The patent publication D1 provides no measure about MTU of a medium through which a unified packet is sent, or of a network in unifying the packets. Accordingly, even if the packet number is reduced by unifying plural packets in transmitting the data, the packet to be transmitted may be discarded or fragmented when the packet is transmitted through the physical medium having an MTU size smaller than the size of the unified packet. Consequently, sufficient effects by packet unification are not obtained by the conventional art. Japanese Unexamined Patent Publication No. 2002-9832 (D2) proposes an approach of reducing a load to a network by unifying, fragmenting, and re-structuring packets considering the MTU.

### DISCLOSURE OF THE INVENTION

In the conventional art, if the router device receives a plurality of communication data directed to the same destination in a short period intensively, particularly, in the case where routing is carried out from a subnet using a high-speed transmission medium to a subnet using a low-speed transmission medium, a load to a routing can be reduced by sequentially sending plural packets to the same destination. However, there is a case that a sender intends to send complex data for a certain purpose, or wishes to send communication data with a certain time interval for a specific purpose. This information is called as communication protocol information. If plural communication data directed to the same destination are unified, part of the communication protocol information may be dropped during the transmission, which may lead to a drawback that the recipient cannot properly interpret the communication protocol information sent from the sender.

In view of the problems residing in the prior art, it is an object of the present invention to provide a router device, a communication device, a routing method, a routing program, and a computer-readable recording medium recorded with the routing program that enable to obviate establishing and releasing a communication link to be implemented before and after communication for each of destinations, and a carrier sensing operation of checking whether other communication is being conducted before sending communication data, to reduce a processing overhead for each of the destinations, and to accomplish improved communication efficiency.

An aspect of the invention is directed to a router device for relaying data between a first network and a second network. The router device comprises: communication data receiving means for receiving communication data including at least one address of a destination from the first network; communication data storing means for storing therein the at least one communication data received by the communication data receiving means : communication data sending means for sending the communication data to the second network ; communication data temporal storing means for temporarily storing therein the communication data sent to the second network by the communication data sending means : destination comparing means for comparing the destination included in the one or more communication data stored in the communication data storing means with the destination included in the communication data stored in the communication data temporal storing means one by one; communication data transmission controlling means for controlling the communication data storing means to transmit the communication data stored therein to the communication data sending means if a comparison result by the destination comparing means indicates destination matching or if no communication data to be compared is stored in the communication data temporal storing means; and communication data erasing means for erasing the transmitted communication data from the communication data storing means in response to sending the communication data to the second network by the communication data sending means.

According to the above arrangement, the communication data receiving means receives the communication data including the at least one address of the destination from the first network. The received at least one communication data is stored in the communication data storing means. The communication data is sent to the second network, and then is temporarily stored in the communication data temporal storing means. The destination included in the one or more communication data stored in the communication data storing means is compared with the destination included in the communication data stored in the communication data temporal storing means one by one. If the comparison result indicates destination matching or if no communication data to be compared is stored in the communication data temporal storing means, to transmit the communication data stored in the communication data storing means is designated to the communication data sending means. Then, the transmitted communication data is erased from the communication data storing means in response to sending the communication data to the second network.

In the above arrangement, since the communication data having the same destination are sequentially transmitted, establishing and releasing of a communication link which is carried out before and after the communication for each of the destinations, and a carrier sensing operation of checking whether the other communication is being performed prior to sending the communication data can be obviated. Also, a processing overhead for each of the destinations can be reduced, thereby accomplishing improved communication efficiency.

According to the invention, establishing and releasing of a communication link which is carried out before and after the communication for each of the destinations, and a carrier sensing operation of checking whether the other communication is being performed prior to sending the communication data can be obviated. Also, a processing overhead for each of the destinations can be reduced, thereby accomplishing improved communication efficiency.

These and other objects, features and advantages of the present invention will become more apparent upon reading of the following detailed description along with the accompanying drawings,

### BRIEF DESCRIPTION OF THE DRAWINGS

FIG. 1 is a block diagram showing an arrangement of a router device in accordance with a first embodiment of the invention.
FIG. 2 is an illustration showing an example of a system configuration of a communication network system to which the router device in the first embodiment is connected.
FIG. 3 is an illustration showing an example of a data construction in the case where a data area of communication data received by the router device in the first embodiment is constituted of single basic data.
FIG. 4 is an illustration showing another example of the data construction in the case where the data area of communication data received by the router device in the first embodiment is constituted of single basic data.
FIG. 5 is an illustration showing an example of a data construction in the case where a data area of communication data received by the router device in the first embodiment is constituted of complex data.
FIG. 6 is an illustration showing another example of the data construction in the case where the data area of communication data received by the router device in the first embodiment is constituted of complex data.
FIG. 7 is an illustration showing an example of a data construction of a router information table group stored in the router device in the first embodiment.
FIG. 8 is an illustration showing an example of a router information table group stored in the respective router devices on the communication network system shown in FIG. 2.
FIG. 9 is a flowchart showing a processing until the router device stores communication data.
FIG. 10 is a flowchart showing a processing until the router device transmits communication data.
FIG. 11 is an illustration showing an example of communication data sent from or received by the router device on the communication network system shown in FIG. 2.
FIG. 12 is an illustration showing an example of a communication data table stored in a communication data storage of the router device.
FIG. 13 is an illustration showing an example of a data construction in the case where the communication data shown in FIG. 3 is sequentially transmitted.
FIG. 14 is an illustration showing an example of a data construction in the case where the communication data shown in FIG. 4 is sequentially transmitted.
FIG. 15 is an illustration showing an example of a data construction, in which the data amount of secondly transmitted communication data and thereafter is reduced in the case where the communication data shown in FIG. 3 is sequentially transmitted.
FIG. 16 is an illustration showing an example of a data construction, in which the data amount of secondly transmitted communication data and thereafter is reduced in the case where the communication data shown in FIG. 4 is sequentially transmitted.
FIG. 17 is an illustration showing an example of a data construction, in which the data amount of secondly transmitted communication data and thereafter is reduced in the case where the communication data shown in FIG. 3 is sequentially transmitted.
FIG. 18 is an illustration showing an example of a data construction, in which the data amount of secondly transmitted communication data and thereafter is reduced in the case where the communication data shown in FIG. 4 is sequentially transmitted.
FIG. 19 is a block diagram showing an example of an arrangement of an apparatus in the first embodiment.
FIG. 20 is a flowchart showing a processing until the apparatus stores communication data.
FIG. 21 is a flowchart showing a control processing to be executed by the apparatus based on the communication data.
FIG. 22 is a block diagram showing an arrangement of a router device in accordance with n second embodiment of the invention.
FIG. 23 is a flowchart showing an example of a processing until the router device in the second embodiment stores communication data.
FIG. 24 is an illustration showing an example of a data construction of communication data having the basic data number of "1".
FIG. 25 is an illustration showing an example of a data construction of communication data having the basic data number of "3".
FIG. 26 is a block diagram showing an arrangement of a router device in accordance with a third embodiment of the invention.
FIG. 27 is a flowchart showing an example of a processing until the router device in the third embodiment stores communication data.
FIG. 28 is an illustration showing an example of a data construction of communication data, wherein the basic data number is "1", and the communication data includes basic data number information and received time information.
FIG. 29 is an illustration showing an example of a data construction of communication data having complex data, wherein the basic data number is "3", and the communication data includes the basic data number information and the received time information.
FIG. 30 is a block diagram showing an example of an arrangement of an apparatus in the third embodiment.
FIG. 31 is an illustration showing an example of a data construction of communication data, wherein the basic data number of "1", and the communication data includes the basic data number information and received time interval information.
FIG. 32 is an illustration showing an example of a data construction of communication data having complex data, wherein the basic data number of "3", and the communication data includes the basic data number information and the received time interval information.
FIG. 33 is a block diagram showing an arrangement of a router device in accordance with a fourth embodiment of the invention.
FIGS. 34 and 35 are flowcharts showing an example of a processing until the router device in the fourth embodiment transmits communication data.
FIG. 36 is an illustration showing an example of a data construction of communication data to be transmitted in the fourth embodiment.
FIG. 37 is an illustration showing an example of a data construction of communication data in the case where different parameter information are alternately and repetitively transmitted.
FIG. 38 is a block diagram showing an arrangement of a router device in accordance with a fifth embodiment of the invention.
FIG. 39 is a flowchart showing an example of a processing until the router device in the fifth embodiment transmits communication data.
FIG. 40 is a flowchart showing another example of the processing until the router device in the fifth embodiment transmits communication data.
FIG. 41 is an illustration showing an example of a data construction of communication data to be transmitted in the fifth embodiment.
FIG. 42 is an illustration showing an example of a data construction of communication data in the case where received time interval information concerning communication data having the same data contents is transmitted along with same data number information.
FIG. 43 is an illustration showing a configuration of a communication network system in a sixth embodiment of the invention.
FIG. 44 is an illustration showing an arrangement of a router device in the sixth embodiment.
FIG. 45 is an illustration showing an example of a broadcast message receiving node table stored in a broadcast message receiving node table storage.

### BEST MODE FOR CARRYING OUT THE INVENTION

In the following, embodiments of the invention are described referring to the drawings.

### (First Embodiment)

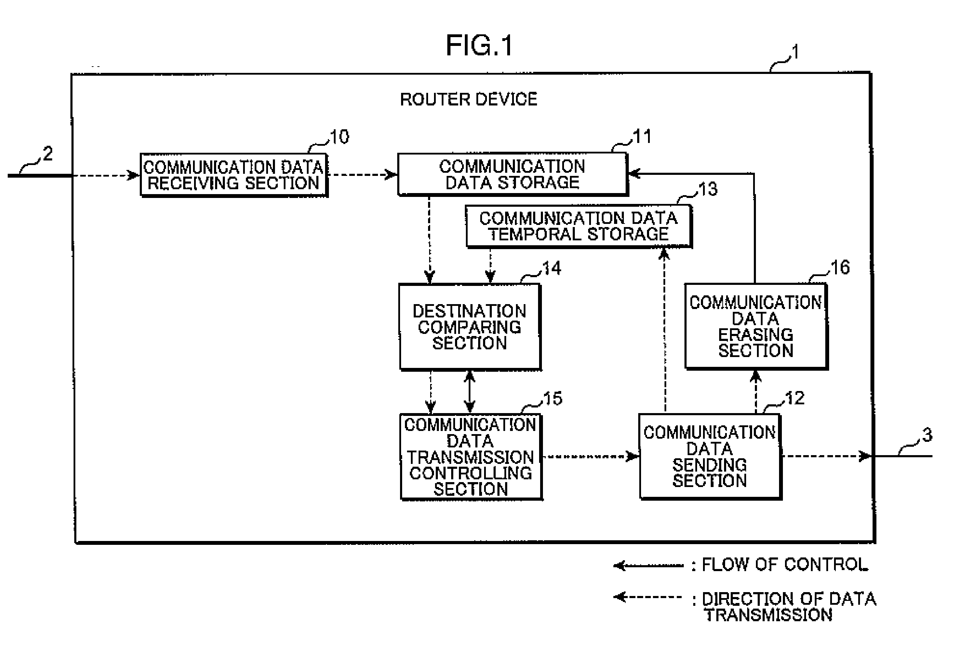

FIG. 1 is a block diagram showing an arrangement of a router device in accordance with a first embodiment of the invention. Referring to FIG. 1, the router device 1 is connected to a high-speed transmission medium 2 and to a low-speed transmission medium 3. The high-speed transmission medium 2 is for instance a medium conforming to the Ethernet^{™} or IEEE 1394 standard. The low-speed transmission medium 3 is for instance a specific low power wireless or a power line.

The router device 1 includes a communication data receiving section 10 for receiving communication data from a subnet on the high-speed transmission medium 2; a communication data storage 11 for rewriting a destination of the received communication data into a destination in a subnet on the low-speed transmission medium 3 to which the communication data is to be sent, and for attaching the communication data including the rewritten destination to a tail section of a communication data table stored therein ; a communication data sending section 12 for sending the communication data to the subnet on the low-speed transmission medium 3: a communication data temporal storage 13 for temporarily storing the communication data sent to the subnet on the low-speed transmission medium 3 by the communication data sending section 12; a destination comparing section 14 for comparing the destination included in the communication data stored in the communication data storage 11 with the destination included in the communication data stored in the communication data temporal storage 13 by setting a data reading position of the communication data table, which is stored as an internal variable in the communication data storage 11, to a leading section of the communication data table, and by sequentially reading the communication data from the leading section of the communication data table; a communication data transmission controlling section 15 for designating the communication data sending section 12 to send the communication data stored in the communication data storage 11 if a comparison result by the destination comparing section 14 indicates destination matching or if no communication data is stored in the communication data temporal storage 13; and a communication data erasing section 16 for erasing the transmitted communication data from the communication data storage 11 in response to transmission of the communication data to the low-speed transmission medium 3 by the communication data sending section 12.

In the embodiment the communication data receiving section 10 corresponds to an example of communication data receiving means, the communication data storage 11 corresponds to an example of communication data storage, the communication data sending section 12 corresponds to an example of communication data sending means, the communication data temporal storage 13 corresponds to an example of communication data temporal storage, the destination comparing section 14 corresponds to an example of destination comparing means, the communication data transmission controlling section 15 corresponds to an example of communication data transmission controlling means, and the communication data erasing section 16 corresponds to an example of communication data erasing mans.

Also, the router device 1 has an unillustrated read only memory (ROM). The ROM stores a routing program therein. The router device 1 functions as the communication data receiving section 10, the communication data storage 11, the communication data sending section 12, the communication data temporal storage 13, the destination comparing section 14, the communication data transmission controlling section 15, and the communication data erasing section 16 when an unillustrated central processing unit (CPU) executes the routing program.

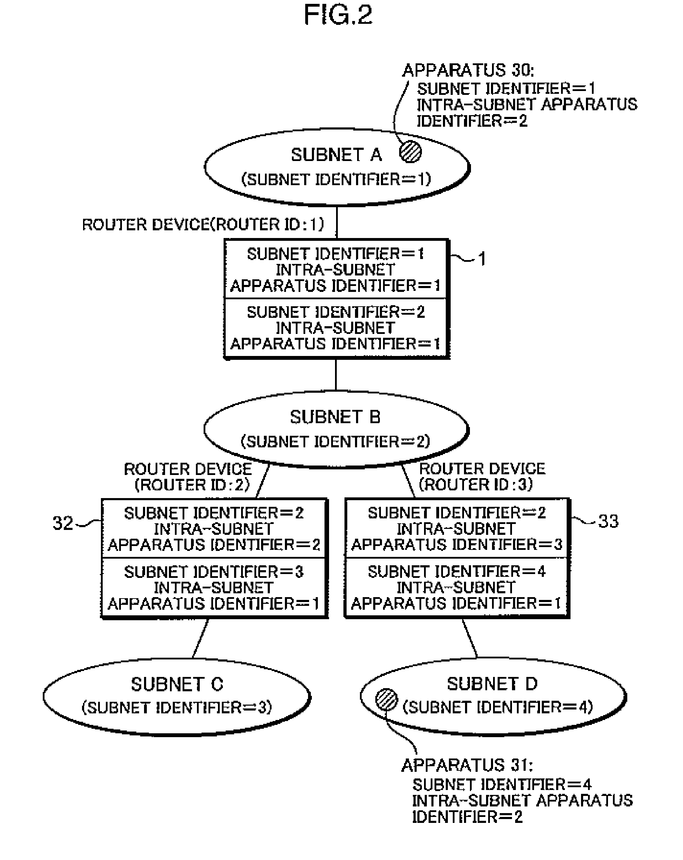

FIG. 2 is an illustration showing an example of a system configuration of a communication network to which the router device 1 in the first embodiment is connected. The communication network system shown in FIG. 2 includes the router device 1 for relaying data between a subnet A and a subnet B, a router device 32 for relaying data between the subnet B and a subnet C, a router device 33 for relaying data between the subnet B and a subnet D, an apparatus 30 connected to the subnet A, and an apparatus 31 connected to the subnet D.

In the above arrangement, the value "1" is allocated to the router device 1 as a router ID. The subnet A is a subnet on the high-speed transmission medium 2. The value "1" is allocated to the subnet A as a subnet identifier for uniquely identifying the subnet A. The subnet B is a subnet on the low-speed transmission medium 3, and a subnet identifier thereof is "2". The subnet C is allocated with a subnet identifier "3", and the subnet D is allocated with a subnet identifier "4". The address of the router device 1 on the side of the subnet A is (0x01, 0x01) because the subnet identifier of the subnet A is "1", and "1" is allocated as an intra-subnet apparatus identifier for uniquely identifying an apparatus connected to the subnet A.

The address of the router device 1 on the side of the subnet B is (0x02. 0x01) because the subnet identifier of the subnet B is "2", and "1" is allocated as an intra-subnet apparatus identifier for uniquely identifying an apparatus connected to the subnet A. Likewise, the router ID of the router device 32 is "2", and the address of the router device 32 on the side of the subnet B is (0x02. 0x02), and the address of the router device 32 on the side of the subnet C is (0x03, 0×01). The router ID of the router device 33 is "3", and the address of the router device 33 on the side of the subnet B is (0x02, 0×03), and the address of the router device 33 on the side of the subnet D is (0x04, 0×01). The address of the apparatus 30 connected to the subnet A is (0×01, 0×02), and the address of the apparatus 31 connected to the subnet D is (0x04, 0x02).

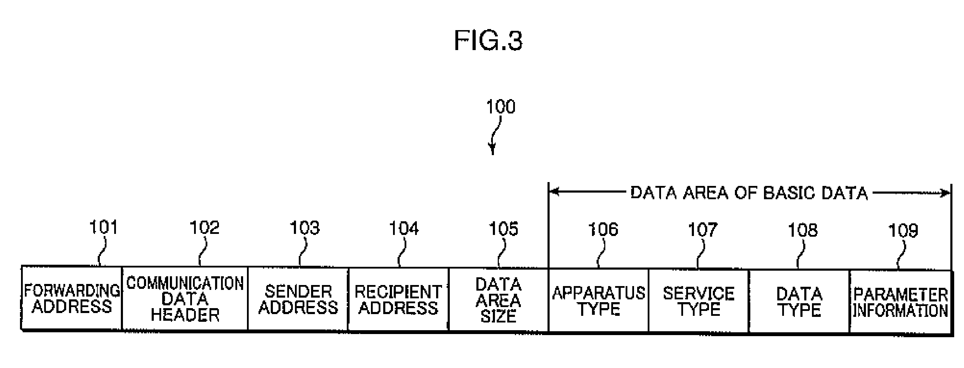

FIG. 3 is an illustration showing an example of a data construction in the case where a data area of communication data received by the router device I in the first embodiment is constituted of single basic data. Referring to FIG. 3, communication data 100 includes a forwarding address section 101, a communication data header section 102, a sender address section 103, a recipient address section 104, a data area size section 105, an apparatus type section 106, a service type section 107, a data type section 108, and a parameter information section 109.

The forwarding address section 101 is an area for writing a rewritten destination when the communication data storage 11 rewrites the current destination into the destination in the subnet on the low-speed transmission medium 3 to which the communication data is to be sent. The forwarding address section 101 represents an address in the subnet to which the data is to be forwarded, and includes a subnet identifier and an intra-subnet apparatus identifier. An area for storing basic data or complex data is called as a data area. The communication data header section 102 includes information for discriminating whether the data stored in the data area is in the format of basic data or in the format of complex data, information for discriminating whether the data area is encrypted, information for discriminating whether the recipient address is a single address or a multiple address, and a hop counter value for routing which is incremented by one each time the data is transmitted via the router device. For instance, in the case where the hop counter value exceeds a predetermined hop counter upper limit, the communication data including the hop counter value is discarded.

The sender address section 103 and the recipient address section 104 each is determined by the sender of the communication data, and includes a subnet identifier and an intra-subnet apparatus identifier. The data area size section 105 represents a byte size of the data area, In the case where the data area is constituted of single basic data, the data area is constituted of the apparatus type section 106, the service type section 107, the data type section 108, and the parameter information section 109.

The apparatus type section 106 represents a type of an apparatus such as an air conditioner, a refrigerator, and a washing machine. The data type section 108 represents a type of a control to be implemented, such as an operating state of the apparatus such as ON/OFF of a power source, automatic/manual operation of the air conditioner or a like apparatus, operation mode of the apparatus as to whether the air conditioner is operated for cooling or warming, temperature setting, or humidity setting. The parameter in formation section 109 represents setting contents in association with the data type section 108. For instance, if the data type section 108 represents an operating state of the apparatus, the parameter information section 109 represents setting contents such as ON/OFF of the power source. If the data type section 108 represents an operation mode of the air conditioner, the parameter information section 109 represents setting contents as to automatic/manual operation of the air conditioner, or setting contents as to cooling or warming. If the data type section 108 represents temperature setting, the parameter information section 109 represents a temperature setting value such as 22°C. If the data type section 108 represents humidity setting, the parameter information section 109 represents a humidity setting value such as 14 °C (sic).

The service type section 107 represents designation regarding an operation for the designated data type section 108. The service type section 107, for instance, represents a writing request, a writing response, a reading request, a reading response, or a notice. For instance, if the user wishes to set the operation mode of the air conditioner to the automatic mode, the air conditioner is designated as the apparatus type section 106, a writing request is designated as the service type section 107, the operation mode is designated as the data type section 108, and the automatic mode is designated as the parameter information section 109.

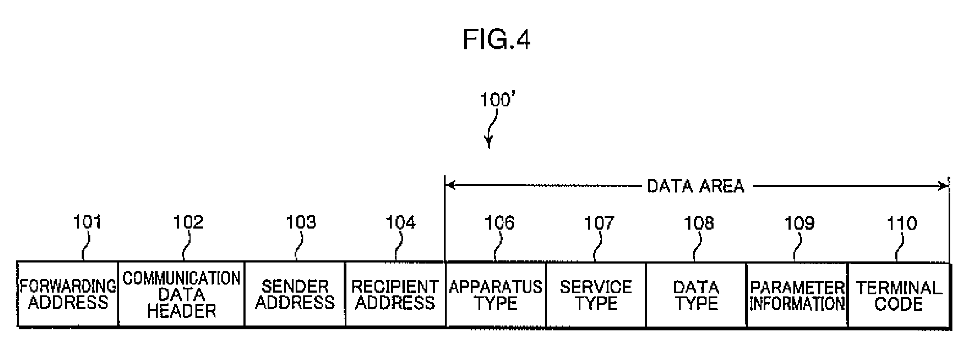

FIG. 4 is an illustration showing another example of a data construction in the case where the data area of the communication data received by the router device 1 in the first embodiment is constituted of single basic data. Referring to FIG. 4, communication data 100' is constituted of a forwarding address section 101, a communication data header section 102, a sender address section 103, a recipient address section 104, an apparatus type section 106, a service type section 107, a data type section 108, a parameter information section 109, and a terminal code section 110. Elements in FIG. 4 that are identical or equivalent to those in FIG. 3 have like indications and like reference numerals, and description thereof is omitted herein.

Referring to FIG. 4, the communication data 100' does not include the data area size section 105, and includes the terminal code section 110. The terminal code section 110 represents the end of the data. The communication data header section 102 in the communication data 100' merely includes information for discriminating whether the recipient address is a single address or a multiple address, and a hop counter value for muting, and does not include information for discriminating whether the data stored in the data area is in the format of basic data or in the format of complex data, and information for discriminating whether the data area is encrypted. By adding the terminal code section 110, the end of the data area can be discriminated, which enables to eliminate the data area size section 105 shown in FIG. 3.

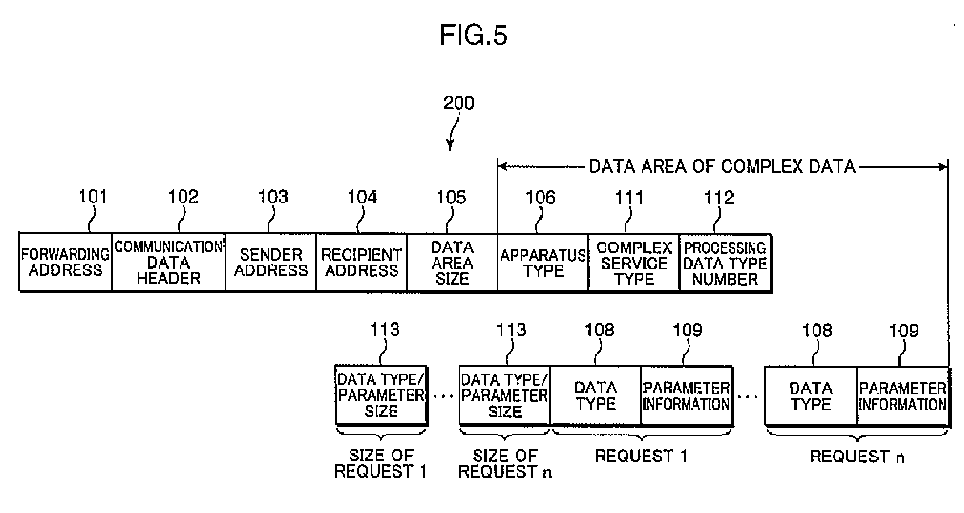

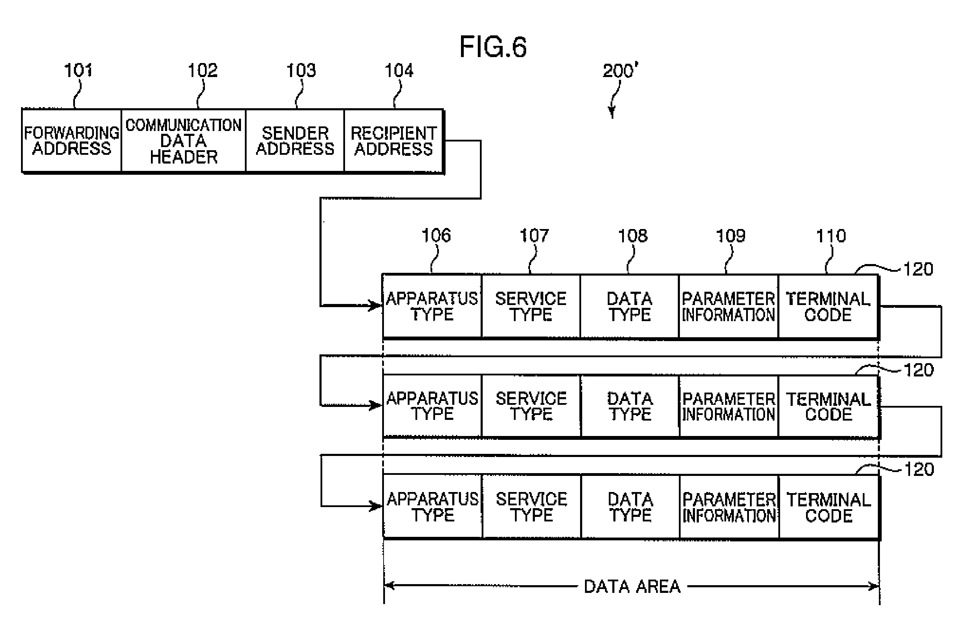

FIG. 5 is an illustration showing an example of a data construction in the case where the data area of communication data received by the router device 1 in the first embodiment is constituted of complex data. Referring to FIG. 5, communication data 200 is constituted of a forwarding address section 101, a communication data header section 102, a sender address section 103, a recipient address section 104, a data area size section 105, an apparatus type section 106, a complex service type section 111, a processing data type number section 112, a data type/parameter size section 113 which reflects the request number, a data type section 108 which reflects the request number, and a parameter information section 109 which reflects the request number. Elements in FIG. 6 that are identical or equivalent to those in FIG. 3 have like indications and like reference numerals, and description thereof is omitted herein. The complex service type section 111 represents designation concerning all possible operations of the data type section 108 of the apparatus represented by the apparatus type section 106. A writing request, a writing response, a reading request, a reading response, a notice, or the like is designated as the complex service type section 111.

The processing data type number section 112 represents the number of designated data type sections 108. The data type/parameter size section 113 represents the data size of each set constituted of one of the data type sections 108 and one of the parameter information sections 109. In other words, the data type/parameter size section 113 is designated by the number corresponding to the number of the designated data type sections 108. For instance, if the user wishes to set the operation mode of the air conditioner to the automatic mode, and to set the temperature of the air conditioner to 26°C, the air conditioner is designated as the apparatus type section 106, a writing request is designated as the complex service type section 111, and "2" is designated as the processing data type number section 112. Subsequently, the sum of the data size of the data type section 108, which represents the operation mode, and the data size of the parameter information section 109, which represents setting of the automatic mode, is designated as the first data type/parameter size section 113, and then, the sum of the data size of the data type section 108, which represents the temperature, and the data size of the parameter information section 109, which represents setting of the temperature to 26°C, is designated as the second data type/parameter size section 113. In other words, the operation mode is designated as the first data type, the automatic mode is designated as the first parameter information, the temperature setting is designated as the second data type, and 26°C is designated as the second parameter information.

FIG. 6 is an illustration showing another example a data construction in the case where the data area of communication data received by the router device 1 in the first embodiment is constituted of complex data. Referring to FIG. 6, communication data 200' is constituted of a forwarding address section 101, a communication data header section 102, a sender address section 103, a recipient address section 104, and a plurality of basic data 120. Each of the basic data 120 is constituted of an apparatus type section 106, a service type section 107, a data type section 108, a parameter information section 109, and a terminal code section 110. Elements in FIG. 6 that are identical or equivalent to those in FIGS. 3 and 4 have like indications and like reference numerals, and description thereof is omitted herein. The data area of the communication data 200' in FIG. 6 is constituted of three basic data 120.

The communication data 200' in FIG. 6 does not include the data area size section 105, and includes the terminal code section 110. Also, the communication data header section 102 in the communication data 200' merely includes information for discriminating whether the recipient address is a single address or a multiple address, and a hop counter value for routing, and does not include information for discriminating whether the data stored in the data area is in the format of basic data or in the format of complex data, and information for discriminating whether the data area is encrypted. In the communication data 200', plural basic data may be joined to constitute complex data.

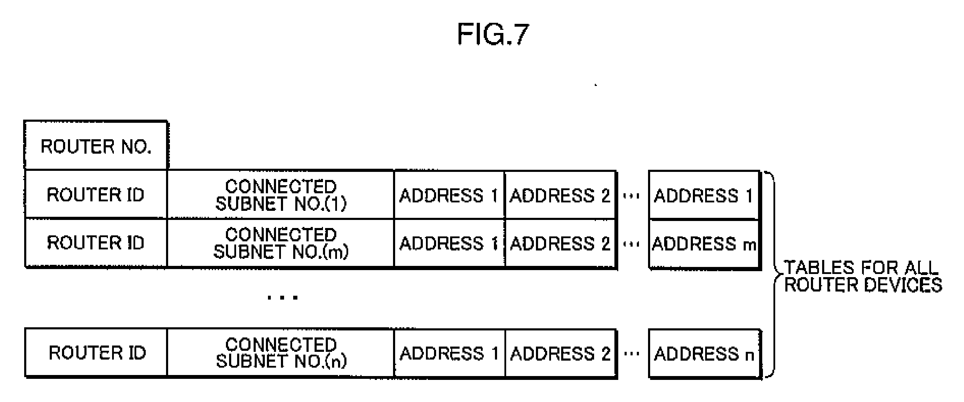

FIG. 7 is an illustration showing an example of a data construction of a group of router information tables which are stored in the router device 1 and are referred to. The router device 1 determines the destination of communication data that is transferred via one or more subnets by referring to the router information table group. All the router devices connected to the communication network system constituted of the plural subnets store the same router information table group. The number of the router devices corresponds to the number of all the router devices connected to the communication network system. One table is provided in association with one router device. Accordingly tables are prepared by the number corresponding to the number of the router devices. One table stores therein a router ID for uniquely identifying the targeted router device on the communication network system, connected subnet number information which represents the number of the subnets to which the router device is connected, and the address of a router device connected to the targeted router device on the subnet, by the number corresponding to the connected subnet number. The address of each router device is constituted of a subnet identifier and an intra-subnet apparatus identifier.

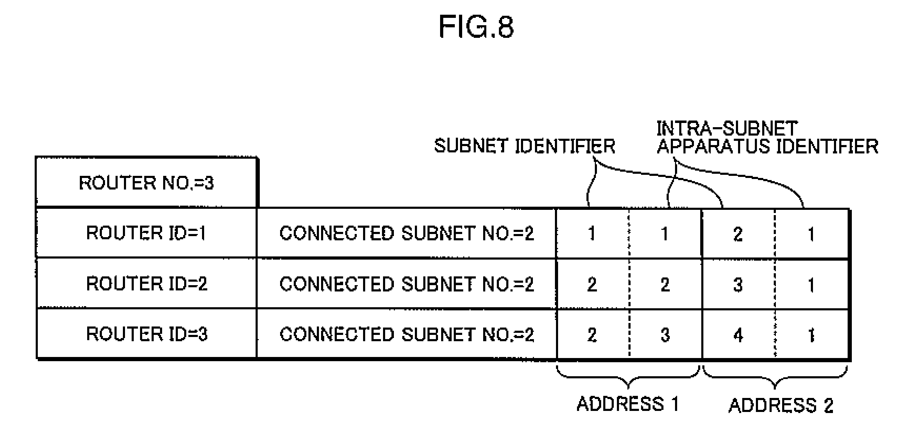

FIG. 8 is an illustration showing an example of a router information table group stored in the router devices 1, 32, and 33 on the communication network System shown in FIG. 2. For instance, in the case where the communication data storage 11 of the router device 1 rewrites the destination of the received communication data into a destination in the subnet on the low-speed transmission medium 3 to which the communication data is to be sent, the destination rewriting is executed by retrieving the subnet identifier of the recipient address included in the communication data sent from the subnet on the low-speed transmission medium 3 from the router information table group, determining the destination to which the communication data is to be sent, and by setting the address of the determined destination as the recipient, address. In this way, the destination is rewritten.

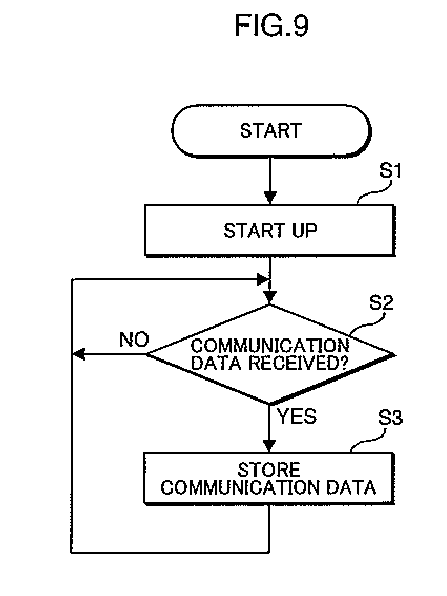

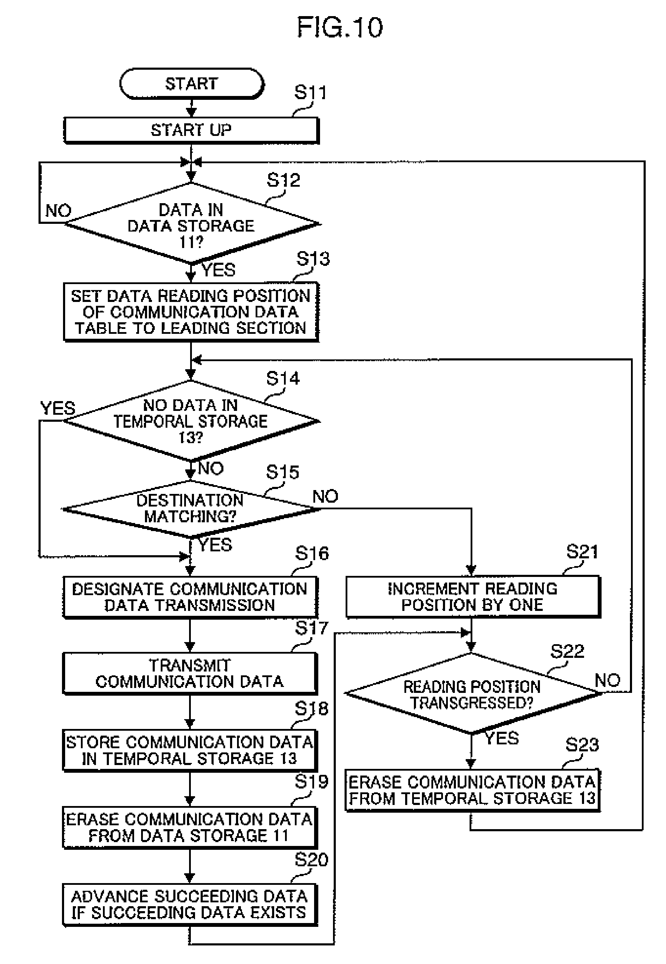

FIGS. 9 and 10 are flowcharts showing an example of a routing processing to be implemented by the router device 1 in the first embodiment. FIG. 9 is a flowchart showing a processing until the router device 1 stores communication data, and FIG. 10 is a flowchart showing a processing until the router device 1 sends the communication data.

A case is described in which the router device 1 sequentially receives three communication data from the high-speed transmission medium 2, the destinations of the firstly received communication data and the thirdly received communication data am identical to each other, and the destination of the secondly received communication data is different from the destination of the firstly and the thirdly received communication data. For sake of explanation, the firstly received communication data is called as first communication data, the secondly received communication data is called as second communication data, and the thirdly received communication data is called as third communication data.

A processing until the router device 1 stores the communication data therein is described referring to FIG. 9. First, after the router device 1 is started up (Step S1), it is judged whether the communication data receiving section 10 has received the first communication data from the high-speed transmission medium 2 (Step S2). If it is judged that the communication data receiving section 10 has not received the first communication data from the high-speed transmission medium 2 (NO in Step S2), the communication data receiving section 10 cyclically repeats the judgment in Step S2 at a predetermined time interval until the first communication data is received.

If, on the other hand, it is judged that the communication data receiving section 10 has received the first communication data from the high-speed transmission medium 2 (YES in Step S2), the communication data receiving section 10 outputs the received communication data to the communication data storage 11. At this time, the communication data storage 11 rewrites the destination of the received first communication data into a destination in the subnet on the high-speed transmission medium 3 to which the communication data is to be sent, and attaches the first communication data including the rewritten destination to the tail section of the communication data table stored in the communication data storage 11 for registration (Step S3).

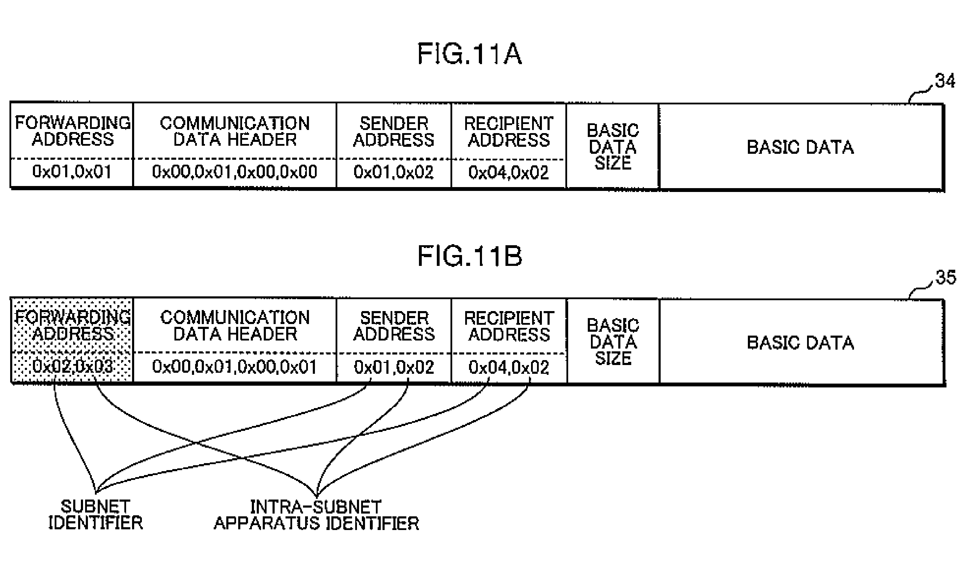

FIGS. 11A and 11B are illustrations showing an example of communication data which is sent to or received by the router device 1 on the communication network system shown in FIG. 2. FIG. 11A is an illustration showing an example of communication data which is sent from the apparatus 30 to the router device 1, and FIG. 11B is an illustration showing an example of communication data which is sent from the router device 1 to the router device 33.

As shown in FIG. 11A, first communication data 34 sent from the apparatus 30 to the router device 1 has a forwarding address (0x01, 0x01), a communication data header (0x00, 0x01, 0x00, 0x00), a sender address (0x01, 0x02), and a recipient address (0x04, 0x02).

On the other hand, as shown in FIG. 11B, first communication data 35 sent from the router device 1 to the router device 33 has a forwarding address (0x02, 0x03), a communication data header (0x00, 0x01, 0x00, 0x01), a sender address (0x01, 0x02), and a recipient address (0x04, 0x02).

As mentioned above, the communication data storage 11 rewrites the forwarding address included in the first communication data 34, which is sent from the apparatus 30 to the router device 1, from the forwarding address (0x01, 0x01) of the router device 1 into the forwarding address (0x02, 0x03) of the router device 33,

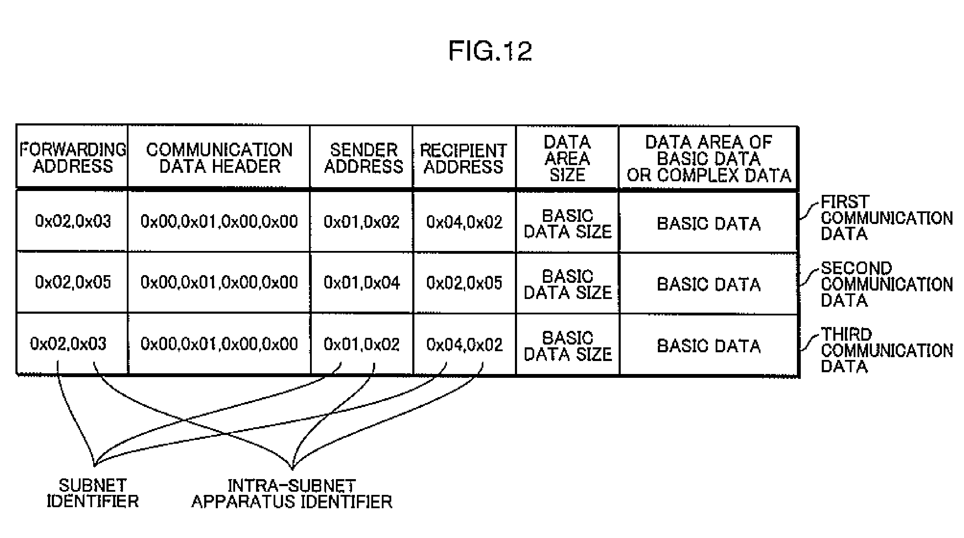

As in the case of receiving the first communication data, the communication data storage 11 rewrites the destinations of the second communication data and the third communication data into destinations in the subnet, on the low-speed transmission medium 3 to which the second communication data and the third communication data are to be sent, and attaches the second and the third communication data including the rewritten destinations to the tail section of the communication data table stored in the communication data storage 11 for registration. FIG. 12 is an illustration showing an example of a communication data table stored in the communication data storage 11 of the router device 1. As shown in FIG. 12, the first communication data, the second communication data, and the third communication data are registered in the communication data table in the received order.

Now, a processing until the router device 1 sends the communication data is described referring to FIG. 10. In the following, a case is described based on an assumption that the three data i.e. the first communication data, the second communication data, and the third communication data are stored in the communication data storage 11.

First, after the router device 1 is started up (Step S11), the destination comparing section 14 judges whether communication data is stored in the communication data storage 11 (Step S12). If it is judged that no communication data is stored in the communication data storage 11 (NO in Step S12), the destination comparing section 14 cyclically repeats the judgment in Step S12 at a predetermined time interval until communication data is stored.

If on the other hand, it is judged that communication data is stored in the communication data storage 11 (YES in Step S12), the destination comparing section 14 sets the data reading position of the communication data table, which is stored in the communication data storage 11 as an internal variable, to a leading section of the communication data table (Step S13). Then, the destination comparing section 14 judges whether communication data is stored in the communication data temporal storage 13 (Step S14). If it is judged that communication data is stored in the communication data temporal storage 13 (NO in Step S14), the routine proceeds to Step S15.

If, on the other hand, it is judged that communication data is not stored in the communication data temporal storage 13 because no communication data is stored in the communication data temporal storage 13 (YES in Step S14), the communication data transmission controlling section 15 outputs, to the communication data sending section 12, the communication data at the data reading position of the communication data table, which is stored as the internal variable in the communication data storage 11, namely, the communication data at the leading section of the communication data table (Step S16). In response to the processing, the communication data sending section 12 sends the received communication data to the subnet on the low-speed transmission medium 3 (Step 817).

Subsequently the communication data sending section 12 outputs the communication data to the communication data temporal storage 13. The communication data temporal storage 13 stores therein the communication data sent by the communication data sending section 12 (Step S18). Then, the communication data erasing section 16 erases the communication data at the data reading position of the communication data table, in other words, erases the communication data at the leading section of the communication data table from the communication data storage 11 (Step S19).

Next, in the case where there is communication data succeeding the erased communication data in the communication data table, the communication data storage 11 advances the succeeding communication data to the leading section of the communication data table (Step S20). As a result of the processing the data reading position of the communication data table corresponds to the position of the secondly located communication data in the communication data table, namely, the position of the second communication data. Then, the destination comparing section 14 judges whether the data reading position of the communication data table transgresses the position of the rearmost communication data (Step S22). If it is judged that the data reading position of the communication data table does not transgress the position of the rearmost communication data (NO in Step S22), the routine goes to Step S14.

Then, the destination comparing section 14 judges that communication data is stored in the communication data temporal storage 13 because the first communication data is stored in the communication data temporal storage 13 (NO in Step S14). Next, the destination comparing section 14 compares the destination of the communication data at the data reading position of the communication data table, namely, the destination of the second communication data with the destination of the communication data stored in the communication data temporal storage 13, namely, the destination of the first communication data (Step S15).

If it is judged that the destination of the communication data at the data reading position of the communication data table, and the destination of the communication data stored in the communication data temporal storage 13 do not coincide with each other (NO in Step S15), the destination comparing section 14 increments the data reading position of the communication data table by one (Step S21). In this case, since the destination of the second communication data at the data reading position of the communication data table, and the destination of the first communication data stored in the communication data temporal storage 13 do not coincide with each other, the destination comparing section 14 increments the data reading position of the communication data table by one.

Next, the destination comparing section 14 judges whether the data reading position of the communication data table transgresses the data reading position of the rearmost communication data (Step S22). In this case, the data reading position of the communication data table indicates the position of the secondly located communication data in the communication data table i.e. the position of the third communication data, and the data reading position of the communication data table does not transgress the position of the rearmost communication data. Accordingly, it is judged that the data reading position of the communication table data does not transgress the position of the rearmost communication data (NO in Step S22), and the routine goes to Step S14.

Next, the destination comparing section 14 judges that communication data is stored in the communication data temporal storage 13 because the first communication data is stored in the communication data temporal storage 13 (NO in Step S14). Then, the destination comparing section 14 compares the destination of the communication data at the data reading position of the communication data table i.e. the destination of the third communication data with the destination of the communication data stored in the communication data temporal storage 13 i.e. the destination of the first communication data (Step S15).

In the case where the destination of the communication data at the data reading position of the communication data table, and the destination of the communication data stored in the communication data temporal storage 13 coincide with each other (YES in Step S15), the communication data transmission controlling section 15 outputs, to the communication data sending section 12, the communication data at the data reading position of the communication data table, which is stored as the internal variable in the communication data storage 11, namely, the communication data at the leading section of the communication data table (Step S16). In this case, since the destination of the third communication data at the data reading position of the communication data table and the destination of the first communication data stored in the communication data temporal storage 13 coincide with each other, the communication data transmission controlling section 15 outputs the third communication data at the data reading position of the communication data table to the communication data sending section 12.

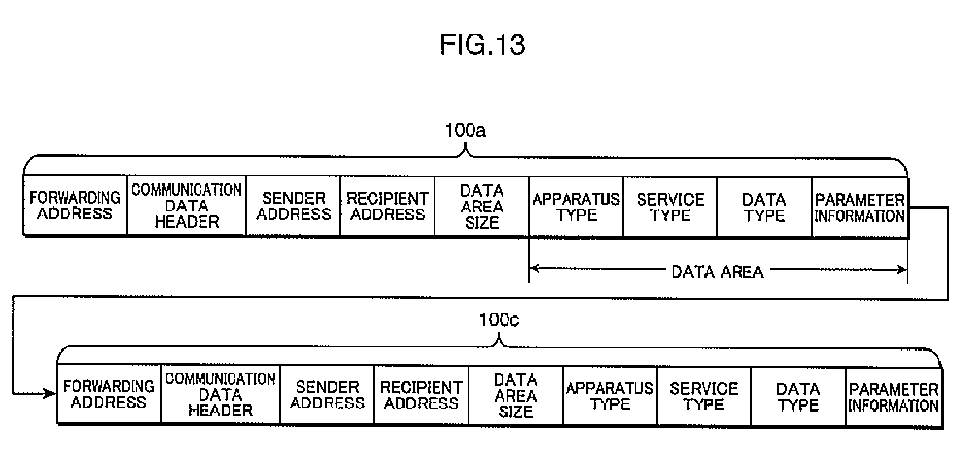

Next, the communication data sending section 12 sends the received communication data to the subnet on the low-speed transmission medium 3 (Step S17). An operation as to how the first communication data and the third communication data are transmitted is described. FIG. 13 is an illustration showing an example of a data construction in the case where the communication data shown in FIG. 3 is sequentially transmitted.

As shown in FIG. 13, since the destination of first communication data 100a and the destination of third communication data 100c are identical, the third communication data 100c is transmitted sequentially after the first communication data 100a. The first communication data 100a and the third communication data 100c each has a data area constituted of single basic data, as shown in FIG. 13. In the case where complex data having a data area constituted of plural basic data is used, the contents of the data area is as shown in FIG. 5.

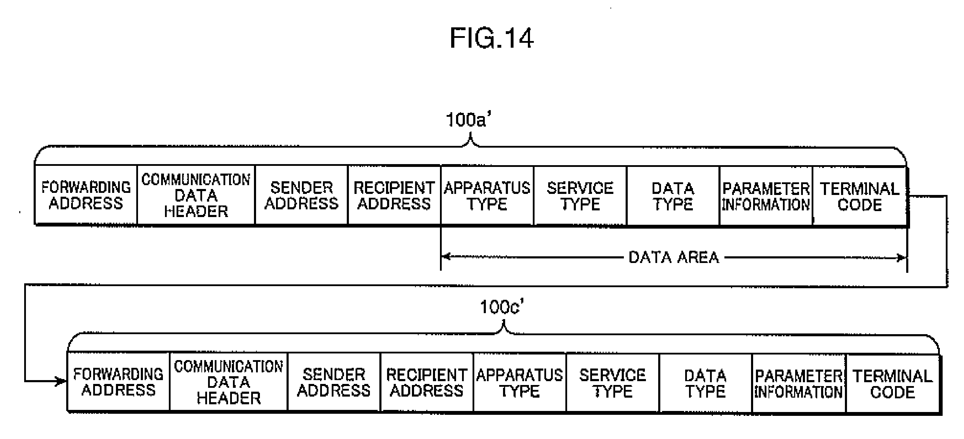

FIG. 14 is an illustration showing an example of a data construction in the case where the communication data shown in FIG. 4 is sequentially transmitted, As shown in FIG. 14, since the destination of first communication data 100a' and the destination of third communication data 100c' are identical to each other, the third communication data 100c' is transmitted sequentially after the first communication data 100a'. The first communication data 100a' and the third communication data 100c' each has a data area constituted of single basic data, as shown in FIG. 14. In the case where complex data having a data area constituted of plural basic data is used, the contents of the data area is as shown in FIG. 6.

Referring back to FIG. 10, the communication data sending section 12 outputs the communication data that has been sent to the subnet on the low-speed transmission medium 3 i.e. the third communication data to the communication data temporal storage 13. In response to the control, the communication data temporal storage 13 stores therein the communication data outputted from the communication data sending section 12 (Step S18). The communication data temporal storage 13 erases the already stored communication data, in other words, erases the first communication data, and stores the new communication data, in other words stores the third communication data therein. Then, the communication data erasing section 16 erases the communication data at the data reading position of the communication data table from the communication data storage 11, in other wards, erases the third communication data that has been stored as the secondly located communication data in the communication data table (Step S19).

Subsequently, in the case where there is communication data succeeding the erased communication data in the communication data table, the communication data storage 11 advances the succeeding communication data for storage. In this case, however, since the third communication data is the rearmost communication data, and there is no communication data succeeding the third communication data, the communication data storage 11 does not perform advancement (Step S20). As a result, the data reading position of the communication data table transgresses the position of the secondly located communication data in the communication data table, in other words, the data reading position of the communication data table transgresses the position of the rearmost communication data (YES in Step S22). Accordingly, the destination comparing section 14 erases the communication data stored in the communication data temporal storage 13, in other words, erases the third communication data (Step S23).

Next, the destination comparing section 14 j judges that communication data is stored in the communication data storage 11 since the second communication data is stored in the communication data storage 11 (YES in Step S12). Then, the destination comparing section 14 sets the data reading position of the communication data table, which is stored in the communication data storage 11 as an internal variable, to the leading section of the communication data table (Step S13).

Subsequently, the destination comparing section 14 judges whether communication data is stored in the communication data temporal storage 13 (Step S14). Since no communication data is stored in the communication data temporal storage 13, the destination comparing section 14 judges that no communication data is stored in the communication data temporal storage 13 (YES in Step S14). Then, the communication data transmission controlling section 15 outputs, to the communication data sending section 12, the communication data at the data reading position of the communication data table, i.e, the second communication data at the leading section of the communication data table (Step S16). In response to the control, the communication data sending section 12 sends the received second communication data to the subnet on the low-speed transmission medium 3 (Step S17).

Next, the communication data sending section 12 outputs the communication data that has been sent to the subnet on the low-speed transmission medium 3 to the communication data temporal storage 13, which, in turn, stores the communication data sent by the communication data sending section 12 (Step S18). The communication data temporal storage 13 erases the already stored communication data i.e. the third communication data, and stores the new communication data i.e. the second communication data therein. Then, the communication data erasing section 16 erases the communication data at the data reading position of the communication data table, in other words, erases the second communication data from the communication data storage 11 (Step S19).

Next, in the case where there is communication data succeeding the erased communication data in the communication data table, the communication data storage 11 advances the succeeding communication data for storage. In this case, however, since all the communication data have been processed, and there is no succeeding communication data, the communication data storage 11 does not perform advancement (Step S20). Since all the communication data have been processed, which is equivalent to a condition that the data reading position of the communication data table transgresses the position of the rearmost communication data (YES in Step S22), the destination comparing section 14 erases the communication data stored in the communication data temporal storage 13, in other words, erases the second communication data (Step S23).

In the above construction, even if plural communication data are sent from the high-speed transmission medium 2 in a short period, and transmission of the communication data to the low-speed transmission medium 3 cannot keep up with the transmission from the high-speed transmission medium 2, which may result in excessive accumulation of communication data in the communication data storage 11, establishing and releasing of a communication link which is carried out before and after the communication for each of the destinations can be obviated by sequentially sending the communication data having the same destination. Also, this arrangement enables to obviate a carrier sensing operation of checking whether the other communication is being performed prior to sending the communication data, which is implemented in a wireless communication as represented by a low-power wireless communication, power line communication, Bluetooth, IEEE 802.11b, or in a wired communication, to reduce a processing overhead for each of the destinations, and to accomplish improved communication efficiency, thereby enabling to suppress excessive accumulation of communication data to be transmitted from the high-speed transmission medium to the low-speed transmission medium.

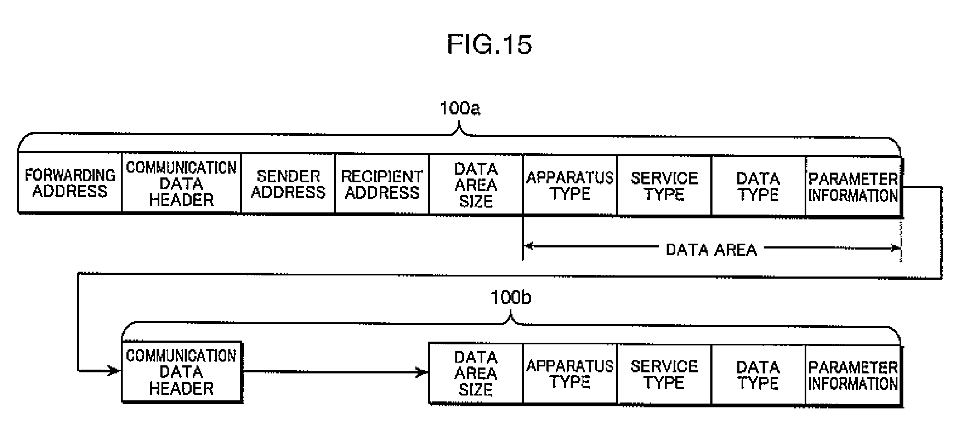

In this embodiment, communication data having the same destination are sequentially transmitted. In the case where transmission of communication data having the same destination is repeated twice or more, the address of the sender or the recipient of the secondly transmitted communication data and thereafter may be omitted. FIG. 15 is an illustration showing an example of a data construction where the data amount of the secondly transmitted communication data and thereafter is reduced in the case where the communication data shown in FIG. 3 is sequentially transmitted.

As shown in FIG. 15, in the case where first communication data 100a and third communication data 100c having the same destination are sequentially transmitted, the communication data sending section 12 may erase the forwarding address, the sender address, and the recipient address from the secondly transmitted communication data and thereafter i.e. the third communication data 100c, and may sequentially send, to the first communication data 100a, the communication data header information, the data area size information, the apparatus type information, the service type information, the data type information, and the parameter information of the third communication data 100c. This arrangement enables to reduce the data amount of the communication data to be sent from the router device 1.

The first communication data 100a and the third communication data 100c in FIG. 15 each has a data area constituted of single basic data. If complex data having a data area constituted of plural basic data is used, the contents of the data area is as shown in FIG. 5.

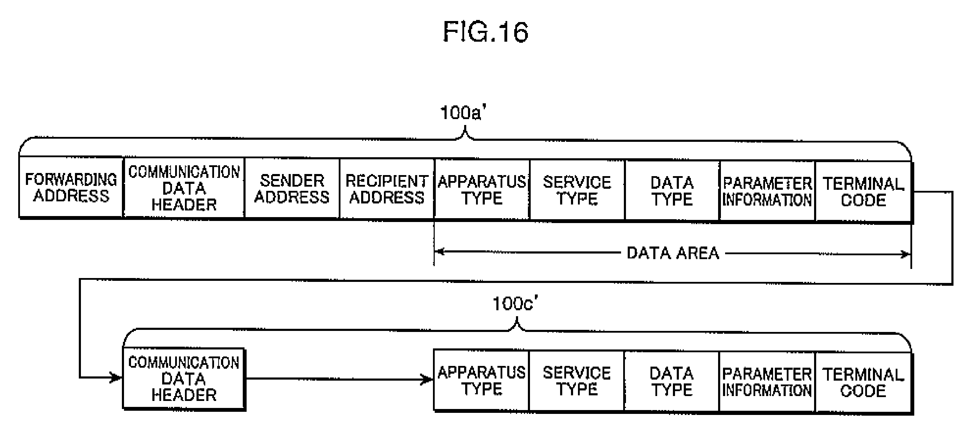

FIG. 16 is an illustration showing an example of a data construction where the data amount of the secondly transmitted communication data and thereafter is reduced in the case where the communication data shown in FIG. 4 is sequentially transmitted.

As shown in FIG. 16, in the case where first communication data 100a' and third communication data 100c' having the same destination are sequentially transmitted, the communication data sending section 12 may erase the forwarding address, the sender address, and the recipient address from the secondly transmitted communication data and thereafter i.e, the third communication data 100c', and may sequentially send, to the first communication data 100a', the communication data header information, the apparatus type information, the service type information, the data type information, the parameter information, and the terminal code information of the third communication data 100c'. This arrangement enables to reduce the data amount of the communication data to be sent from the router device 1.

The first communication data 100a' and the third communication data 100c' in FIG. 16 each has a data area constituted of single basic data. If complex data having a data area constituted of plural basic data is used, the contents of the data area is as shown in FIG. 6.

In this embodiment, communication data having the same destination are sequentially transmitted. Alternatively, in the case where transmission of communication data having the same destination is repeated twice or more, it is possible not only to erase the forwarding address, the sender address, and the recipient address included in the secondly transmitted communication data and thereafter but also to judge whether the header information necessary for transferring communication data, such as a hop counter value, which is used for recording the number of times when the communication data has been routed to the subnet, is identical between the sequentially transmitted communication data, and to omit all the header information if the header information are judged to be identical to each other. Further alternatively, the transmission of the hop counter value included in the communication data header information may be omitted by selecting a smaller or larger hop counter value.

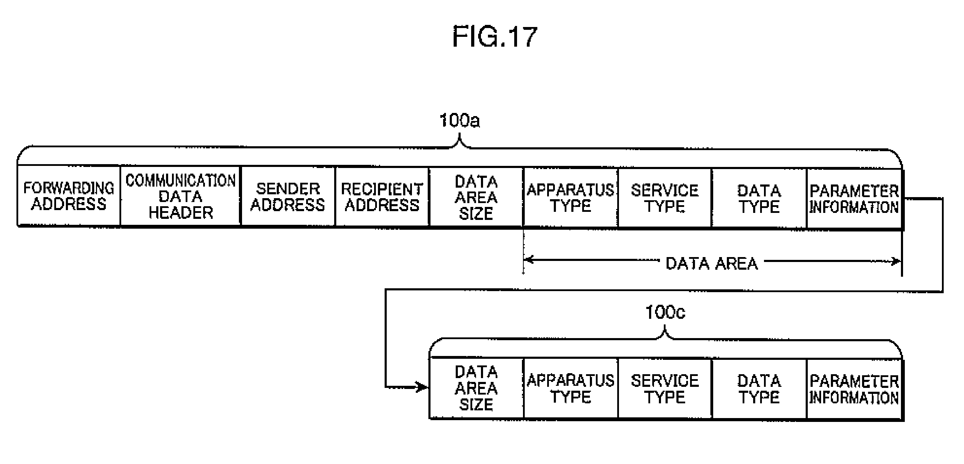

FIG. 17 is an illustration showing an example of a data construction where the data amount of the secondly transmitted communication data and thereafter is reduced in the case where the communication data shown in FIG. 3 is sequentially transmitted. As shown in FIG. 17, in the case where first communication data 100a and third communication data 100c having the same destination are sequentially transmitted, the communication data sending section 12 erases the forwarding address, the sender address, and the recipient address from the secondly transmitted communication data and thereafter, i.e., the third communication data 100c.

Also, the communication data sending section 12 judges whether the communication data header information included in the firstly transmitted communication data i.e. the first communication data 100a is identical to the communication data header information included in the secondly transmitted communication data and thereafter i.e. the third communication data 100c. If it is judged that the communication data header information of the communication data 100a and 100c are identical to each other, the communication data sending section 12 erases the communication data header information included in the secondly transmitted communication data and thereafter. Alternatively, the communication data sending section 12 may sequentially send, to the first communication data 100a, the data area size information, the apparatus type information, the service type information, the data type information, and the parameter information of the third communication data 100c. This arrangement enables to reduce the data amount of the communication data to be sent from the router device 1.

The first communication data 100a and the third communication data 100c in FIG. 17 each has a data area constituted of single basic data. If complex data having a data area constituted of plural basic data is used, the contents of the data area is as shown in FIG. 5.

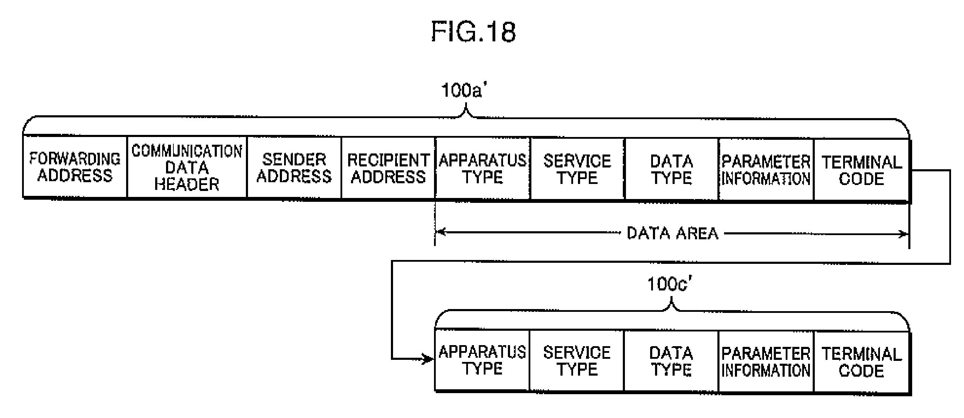

FIG. 18 is an illustration showing an example of a data construction where the data amount of the secondly transmitted communication data and thereafter is reduced in the case where the communication data shown in FIG. 4 is sequentially transmitted. As shown in FIG. 18, in the case where first communication data 100a' and third communication data 100c' having the same destination are sequentially transmitted, the communication data sending section 12 erases the forwarding address, the sender address, and the recipient address from the secondly transmitted communication data and thereafter, i.e., the third communication data 100c (sic).

Also, the communication data sending section 12 judges whether the communication data header information included in the firstly transmitted communication data i.e. the first communication data 100a' is identical to the communication data header information included in the secondly transmitted communication data and thereafter i.e. the third communication data 100c'. If it is judged that the communication data header information of the communication data 100a' and 100c' are identical to each other, the communication data sending section 12 erases the communication data header information included in the secondly transmitted communication data and thereafter. Alternatively, the communication data sending section 12 may sequentially send, to the first communication data 100a', the apparatus type information, the service type information, the data type information, the parameter information, and the terminal code information of the third communication data 100c'. This arrangement enables to reduce the data amount of the communication data to be sent from the router device 1.

The first communication data 100a' and the third communication data 100c' in FIG. 18 each has a data area constituted of single basic data. If complex data having a data area constituted of plural basic data is used, the contents of the data area is as shown in FIG. 6.

In this embodiment, in the case where the communication data storage 11 receives a storage designation, the destination of the received communication data is rewritten into the destination in the subnet on the low-speed transmission medium 3 to which the communication data is to be sent. Alternatively, the communication data receiving section 10 may rewrite the destination in response to receiving the communication data, or the communication data sending section 12 may rewrite the destination before sending the communication data, or the communication data transmission controlling section 15 may rewrite the destination,

In this embodiment, the communication data temporal storage 13 stores the communication data therein each time the communication data sending section 12 sends the communication data. Alternatively, if the destination of the communication data sent from the communication data sending section 12 and the destination of the communication data already stored in the communication data temporal storage 13 are identical to each other, storing of the communication data sent from the communication data sending section 12 may be omitted.

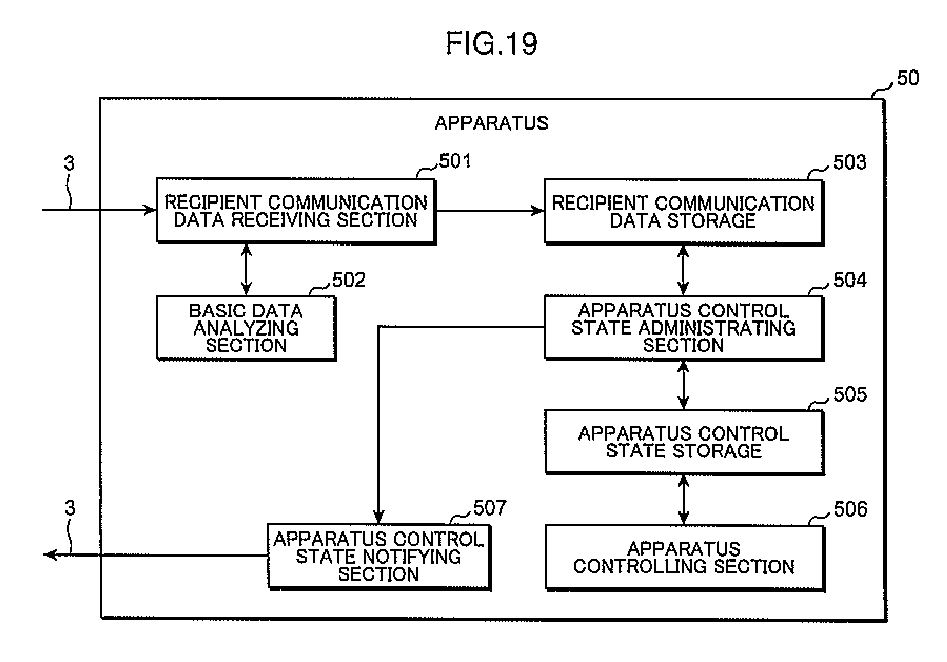

Now, an apparatus as an example of a communication device in the first embodiment is described. FIG. 19 is a block diagram showing an example of the apparatus in the first embodiment. The apparatus 50 is connected to the low-speed transmission medium 3.

The apparatus 50 shown in FIG. 19 includes a recipient communication data receiving section 501, a basic data analyzing section 502, a recipient communication data storage 503, an apparatus control state administrating section 504, an apparatus control state storage 505, an apparatus controlling section 506, and an apparatus control state notifying section 507.

The recipient communication data receiving section 501 receives communication data that has been sent by the router device 1, which is designed to sequentially transmit communication data having the same destination to the low-speed transmission medium, among the communication data sent from the high-speed transmission medium.

In the case where the recipient communication data receiving section 501 sequentially receives two or more communication data, the basic data analyzing section 502 analyzes the basic data indicating processing contents included in the received communication data as individual basic data. The recipient communication data storage 503 stores therein at least one communication data received by the recipient communication data receiving section 501. Also, the recipient communication data receiving section 501 divides the communication data sent from the router device 1 into two or more basic data based on an analysis result by the basic data analyzing section 502.

The apparatus control state administrating section 504 reads out the communication data stored in the recipient communication data receiving section 501, stores the parameter information in association with the data type information included in the communication data into the apparatus control state storage 505 if the service type information included in the communication data indicates a writing request, and reads out the parameter information in association with the data type information included in the communication data from the apparatus control state storage 505 if the service type information included in the communication data indicates a reading request.

The apparatus control state storage 505 stores information representing a control state of the apparatus in association with the data type information and the parameter information. Specifically, the apparatus control state storage 505 stores therein the data type information including an operating state of the apparatus e.g. ON/OFF of the power source, automatic/manual operation of the air conditioner or a like apparatus, operation mode of the apparatus such as warming or cooling. temperature setting, and humidity setting ; and the parameter information including setting contents such as ON/OFF in association with the operating state of the apparatus, automatic/manual operation in association with the operation mode of the air conditioner or a like apparatus, setting contents such as warming or cooling, temperature setting value corresponding to the temperature setting such as 22°C, and humidity setting value corresponding to the humidity setting such as 14°C (sic).

The apparatus controlling section 506 controls the apparatus based on the control state of the apparatus stored in the apparatus control state storage 505. The apparatus control state notifying section 507 notifies the control state of the apparatus in response to receiving a notice request on the control state of the apparatus from the controller or other apparatus. Also, the apparatus control state notifying section 507 automatically notifies the control state of the apparatus if the control state of the apparatus is changed in the case where notice of a change of the control state of the apparatus to the controller or other apparatus is preset.

In this embodiment, the apparatus 50 corresponds to an example of the communication device, the recipient communication data receiving section 501 corresponds to an example of recipient communication data receiving means, the recipient communication data storage 503 corresponds to an example of recipient communication data storing means, and the basic data analyzing section 502 corresponds to an example of basic data analyzing means.

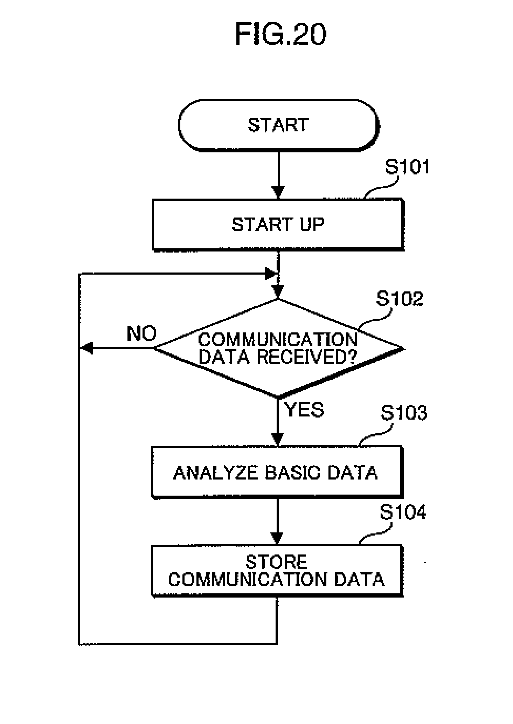

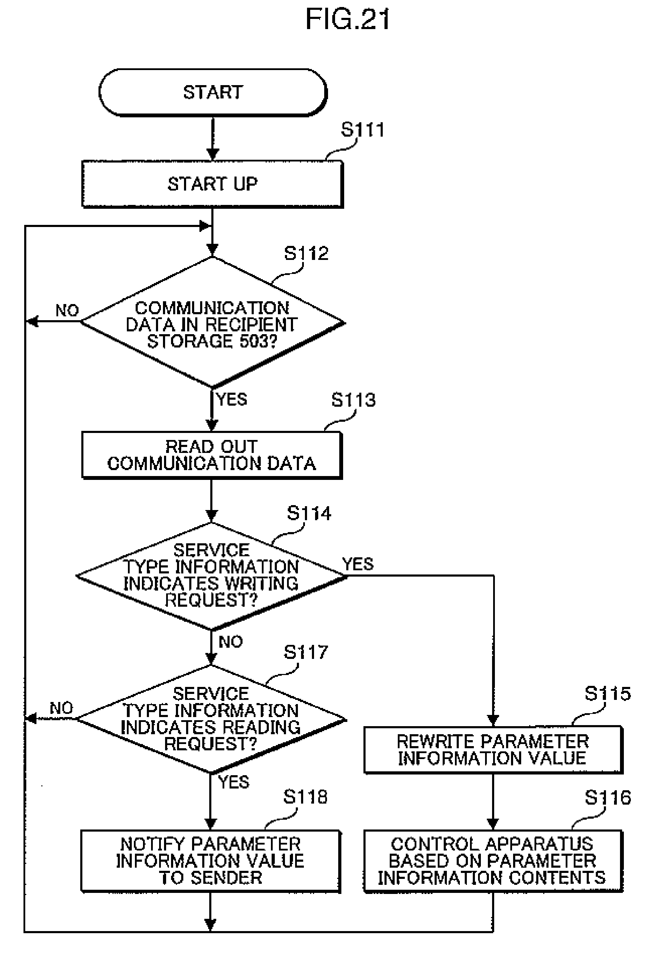

Now, a control processing of the apparatus 50 in the first embodiment is described. FIGS. 20 and 21 are flowcharts showing an example of the control processing of the apparatus 50 in the first embodiment. FIG. 20 is a flowchart showing a processing until the apparatus 50 stores communication data, and FIG. 21 is a flowchart showing a control processing to be executed by the apparatus 50 based on the communication data.

The processing until the apparatus 50 stores the communication data is described referring to FIG. 20. First, after the apparatus 50 is started up (Step S101), the recipient communication data receiving section 501 judges whether communication data has been sent from the low-speed transmission medium 3 (Step S102). If it is judged that communication data has not been sent from the low-speed transmission medium 3 (NO in Step S102), the recipient communication data receiving section 501 cyclically repeats the judgment in Step S102 at a predetermined time interval until the recipient communication data receiving section 501 receives communication data.

If, on the other hand, the recipient communication data receiving section 501 judges that communication data has been sent from the low-speed transmission medium 3 (YES in Step S102), the basic data analyzing section 502 reads out the communication data header information, the sender address information, the recipient address information, the data area size information, and data in the data area of the data area size, which are included in the communication data received by the recipient communication data receiving section 501 (Step S103).

Next, the recipient communication data receiving section 501 causes the recipient communication data storage 503 to store therein the communication data header information, the sender address information, the recipient address information, the data area size information, and the data in the data area of the data area size, which have been read out by the basic data analyzing section 502 (Step S104).

Next, the control processing to be executed by the apparatus 50 based on the communication data is described referring to FIG. 21.

First, after the apparatus 50 is started up (Step S111), the apparatus control state administrating section 504 judges whether communication data is stored in the recipient communication data storage 503 (Step S112). If it is judged that communication data is not stored in the recipient communication data storage 503 (NO in Step S112), the apparatus control state administrating section 504 cyclically repeats the judgment in Step S112 at a predetermined time interval until communication data is stored in the recipient communication data storage 503.

If it is judged that communication data is stored in the recipient communication data storage 503 (YES in Step S112), the apparatus control state administrating section 504 reads out one communication data from the recipient communication data storage 503 (Step S113).

Next, the apparatus control state administrating section 504 judges whether the service type information included in the communication data read out from the recipient communication data storage 503 indicates a writing request (Step S114).

If it is judged that the service type information indicates a writing request (YES in Step S114), the apparatus control state administrating section 504 rewrites the value of the parameter information stored in the apparatus control state storage 505 into the value of the parameter information in association with the data type information included in the communication data (Step S115). Then, the apparatus controlling section 506 controls the apparatus 50 itself depending on the contents of the parameter information stored in the apparatus control state storage 505 (Step S116), and the routine returns to Step S112.

If, on the other hand, it is judged that the service type information does not indicate a writing request (NO in step S114), the apparatus control state administrating section 504 judges whether the service type information included in the communication data read out from the recipient communication data storage 503 indicates a reading request (Step S117). If it is judged that the service type information does not indicate a reading request (NO in Step S117), the routine returns to Step S112.

If, on the other hand, it is judged that the service type information indicates a reading request (YES in Step S117), the apparatus control state administrating section 504 reads out the value of the parameter information in association with the data type information included in the communication data from the apparatus control state storage 505, and outputs the readout value of the parameter information to the apparatus control state notifying section 507. Then, the apparatus control state notifying section 507 sends the value of the parameter information read out by the apparatus control state administrating section 504 to the apparatus having the sender address (Step S118).

### (Second Embodiment)

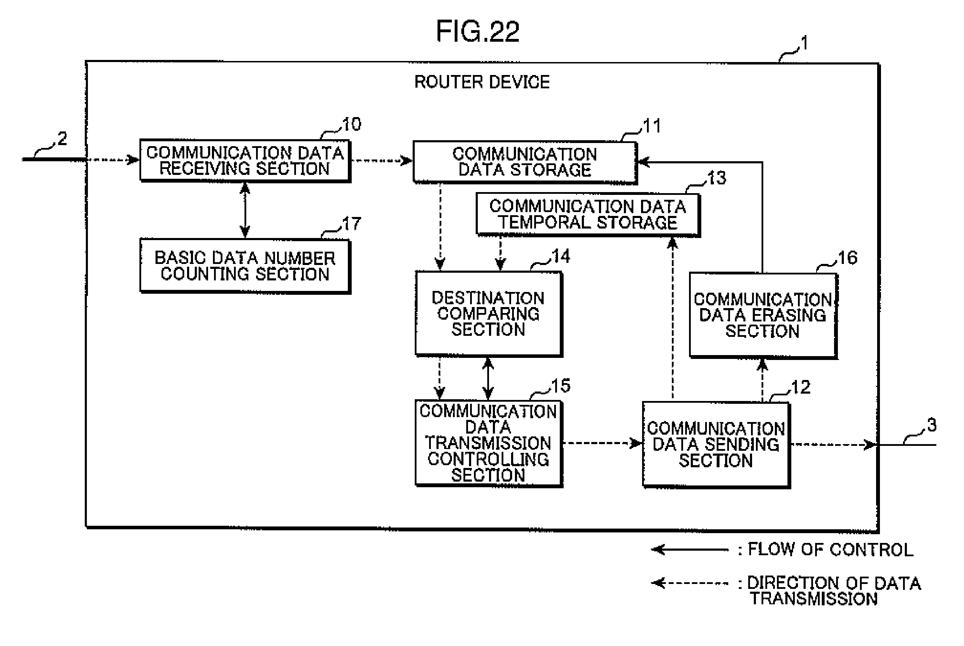

Now, a router device in accordance with a second embodiment of the invention is described. FIG. 22 is a block diagram showing an arrangement of the router device in accordance with the second embodiment. Elements in FIG. 22 identical or equivalent to those in FIG. 1 have like reference numerals, and description thereof is omitted herein.

Referring to FIG. 22, the router device 1 is connected to a high-speed transmission medium 2 and a low-speed transmission medium 3. The router device 1 includes a basic data number counting section 17 for counting the number of basic data included in communication data sent from the high-speed transmission medium 2 and for including the counted number information in the received communication data. In this embodiment, the basic data number counting section 17 corresponds to an example of basic data number counting means.

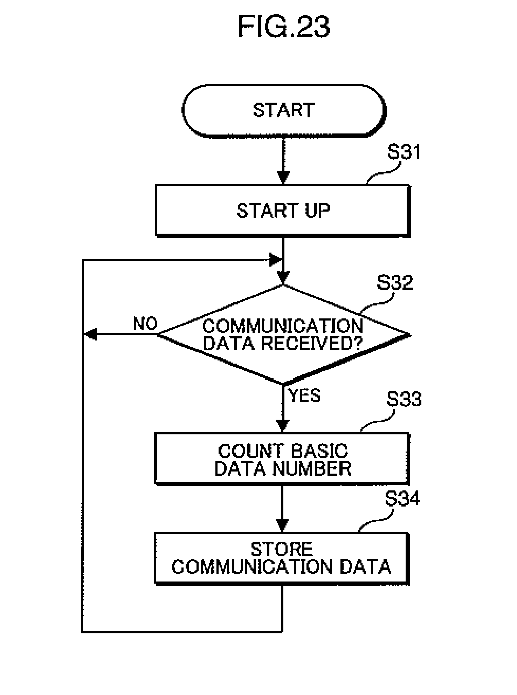

FIG. 23 is a flowchart showing an example of a processing until the router device 1 in the second embodiment stores communication data. Since the processing until the router device 1 in the second embodiment sends the communication data is the same as the processing in FIG. 10, description thereof is omitted herein.

Described is a case where the router device 1 receives communication data including single basic data, and a case where the router device 1 receives communication data including complex data constituted of three basic data under the condition that the router device 1 receives the communication data from the high-speed transmission medium 2. The firstly received communication data is called as first communication data, the secondly received communication data is called as second communication data, and the thirdly received communication data is called as third communication data. The first communication data includes single basic data, and the second communication data includes three basic data.

First, after the router device 1 is started up (Step S31), a communication data receiving section 10 judges whether the communication data receiving section 10 has received communication data from the high-speed transmission medium 2 (Step S32). If it is judged that the communication data receiving section 10 has not received communication data from the high-speed transmission medium 2 (NO in Step S32), the communication data receiving section 10 cyclically repeats the judgment in Step S32 at a predetermined time interval until the communication data receiving section 10 receives communication data.

If, on the other hand, the communication data receiving section 10 has received the first communication data from the high-speed transmission medium 2 (YES in Step S32), the basic data number counting section 17 counts the number of basic data included in the received first communication data. In this embodiment, since the first communication data includes single basic data, the basic data number counting section 17 attaches the value "1" representing the number of basic data to the received first communication data (Step S33).

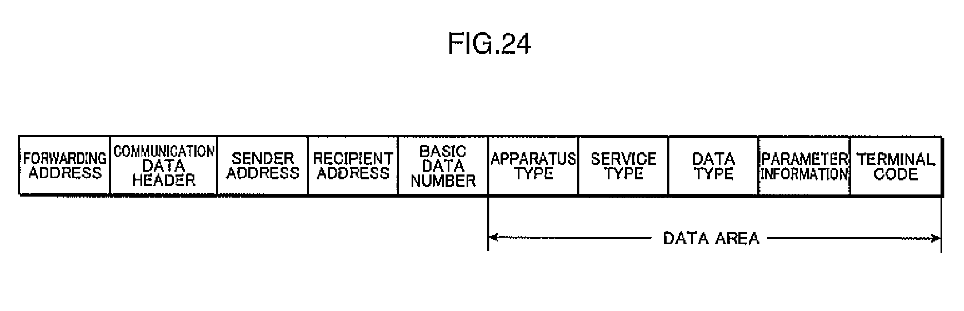

FIG. 24 is an illustration showing an example of a data construction of communication data having the basic data number "1". The basic data number counting section 17 attaches the counted basic data number information between the recipient address and the data area of the communication data. If the basic data number is "1", the value "0×01" is stored.

Then, referring back to FIG. 23, the communication data receiving section 10 outputs the received first communication data to a communication data storage 11. The communication data storage 11 rewrites the destination of the received first communication data into the destination in the subnet on the low-speed transmission medium 3 to which the communication data is to be sent, and registers the first communication data including the rewritten destination in a communication data table stored in the communication data storage 11 (Step S34).

Then, if it is judged that the second communication data is sent from the high-speed transmission medium 2 (YES in Step S32), the basic data number counting section 17 counts the number of basic data included in the received second communication data. In this embodiment, since the first (sic) communication data includes three basic data, the value "3" representing the basic data number is attached to the received second communication data (Step S33).

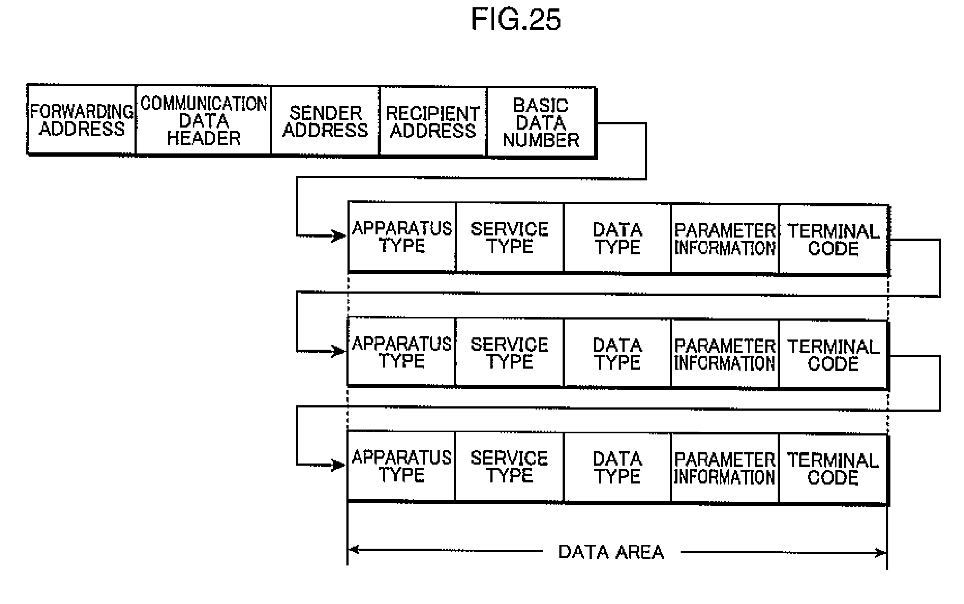

FIG. 25 is an illustration showing an example of a data construction of communication data having the basic data number of "3". As shown in FIG. 25. the basic data number counting section 17 includes the counted basic data number information between the recipient address and the data area of the communication data. In the case where the basic data number is "3", the value "0x03" is stored.

Now, referring back to FIG. 23, the communication data receiving section 10 outputs the received second communication data to the communication data storage 11. The communication data storage 11 rewrites the destination of the received second communication data into the destination in the subnet on the low-speed transmission medium 3 to which the communication data is to be sent, and additionally registers the first (sic) communication data including the rewritten destination in the communication data table stored in the communication data storage 11 (Step S34). The third communication data is stored in the communication data storage 11 in a similar manner as the first and the second communication data.

In the above arrangement, it may be impossible or difficult to judge whether the communication data sent from the sender is single basic data or complex data due to sequential transmission of the basic data and the complex data in the case where communication is performed based on non-sequential transmission, or in the case where communication data having the same destination is sequentially transmitted, or in the case where transmission of header information of communication data to be sequentially transmitted is omitted, as described in the first embodiment. There are cases that the sender wishes to send plural basic data individually or wishes to send complex data by collecting a certain number of basic data in a group for a specific purpose. In such a case, counting the number of individual basic data and the number of basic data originally included in the complex data, and including the counted value information in the communication data in sequentially transmitting the communication data, as executed in this embodiment, enables to send information necessary for the communication as intended by the sender to the recipient, even in the case where the communication data is sequentially sent to the same destination.

New, an apparatus as an example of a communication device in the second embodiment is described. Since the arrangement of the apparatus in the second embodiment is identical to that of the apparatus shown in FIG. 19. the apparatus in the second embodiment is described referring to FIG. 19. Further, description on the arrangement of the apparatus in the second embodiment that is identical or equivalent to that of the apparatus in the first embodiment is omitted herein.

A recipient communication data receiving section 501 judges that the received communication data includes single basic data if the number of basic data included in the received communication data is "1", and judges that the received communication data includes complex data constituted of plural basic data if the number of basic data included in the communication data is "2" or larger.

Since a processing until the apparatus 50 in the second embodiment stores the communication data is the same as the processing shown in FIG. 20, and a control processing to be executed by the apparatus 50 in the second embodiment based on the communication data is the same as the processing shown in FIG. 21, description thereof is omitted herein.

In this embodiment, the basic data number counting section 17 includes the basic data number information in the communication data. Alternatively, the basic data number counting processing may be realized by causing the basic data number counting section 17 to receive a processing designation and communication data from the communication data receiving section 10, or by causing the basic data number counting section 17 to receive a processing designation and communication data in response to additionally storing the communication data in the communication data storage 11.

In this embodiment, in the case where data contents are encrypted, even if complex data is de-encrypted, the encrypted data is regarded as one data, and counted as one encrypted communication data.

### (Third Embodiment)

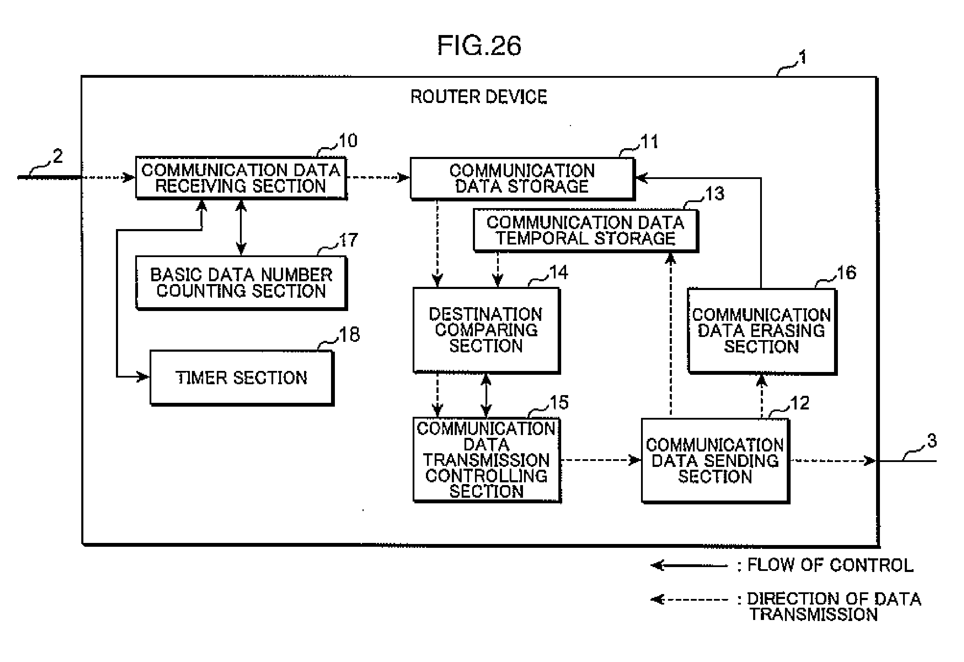

Now, a third embodiment of the invention is described. FIG. 26 is a block diagram showing an arrangement of a router device in accordance with the third embodiment. Elements in FIG. 26 which are identical or equivalent to those in FIGS. 1 and 22 have like reference numerals, and description thereof is omitted herein.

Referring to FIG. 26, the router device 1 is connected to a high-speed transmission medium 2 and a low-speed transmission medium 3. The router device 1 includes a timer section 18 for measuring the time when the router device 1 has received communication data from the high-speed transmission medium 2 to include the acquired received time information in the received communication data. In this embodiment, the timer section 18 corresponds to an example of received time measuring means.

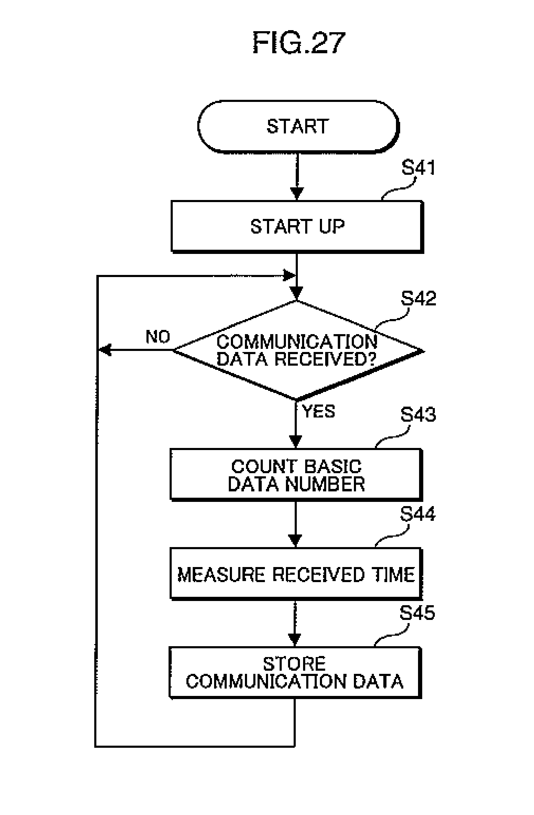

FIG. 27 is a flowchart showing an example of a processing until the router device 1 in the third embodiment stores communication data. Since a processing until the router device 1 in the third embodiment sends communication data is identical to the processing shown in FIG. 10, description thereof is omitted herein.

First, after the router device 1 is started up (Step S41), a communication data receiving section 10 judges whether communication data is sent from the high-speed transmission medium 2 (Step S42). If it is judged that no communication data is sent from the high-speed transmission medium 2 (NO in Step S42), the communication data receiving section 10 cyclically repeats the judgment in Step S42 at a predetermined time interval until the communication data receiving section 10 receives communication data.

If, on the other hand, communication data is sent from the high-speed transmission medium 2 (YES in Step S42), a basic data number counting section 17 counts the number of the basic data included in the received communication data, and includes the counted basic data number information in the received communication data (Step S43).

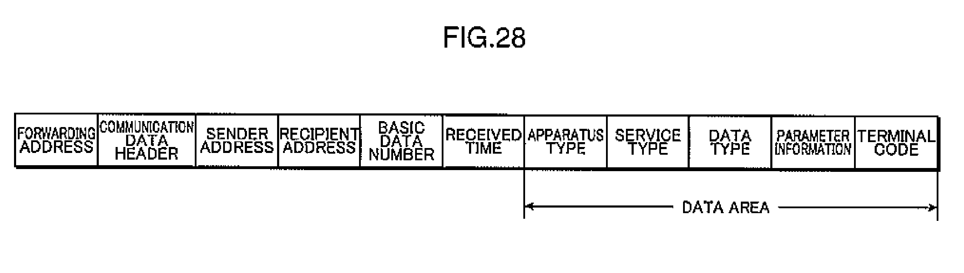

Next, the timer section 18 measures the time when the communication data receiving section 10 has received the communication data, and includes the received time information in the received communication data (Step S44). In this section, the communication data including the received time information is described. FIG. 28 is an illustration showing an example of a data construction of communication data where the basic data number is "1", and the communication data includes the basic data number information and the received time information.

As shown in FIG. 28, the basic data number counting section 17 includes the counted basic data number information after the recipient address information of the communication data. In this section, if the basic data number is "1", the value "0x01" is stored. Also, the timer section 18 measures the time when the communication data receiving section 10 has received the communication data, and includes the received time information after the basic data number information of the communication data. In this case, the value "2005040I 17:30:00 300ms" is stored as the received time information, for instance.

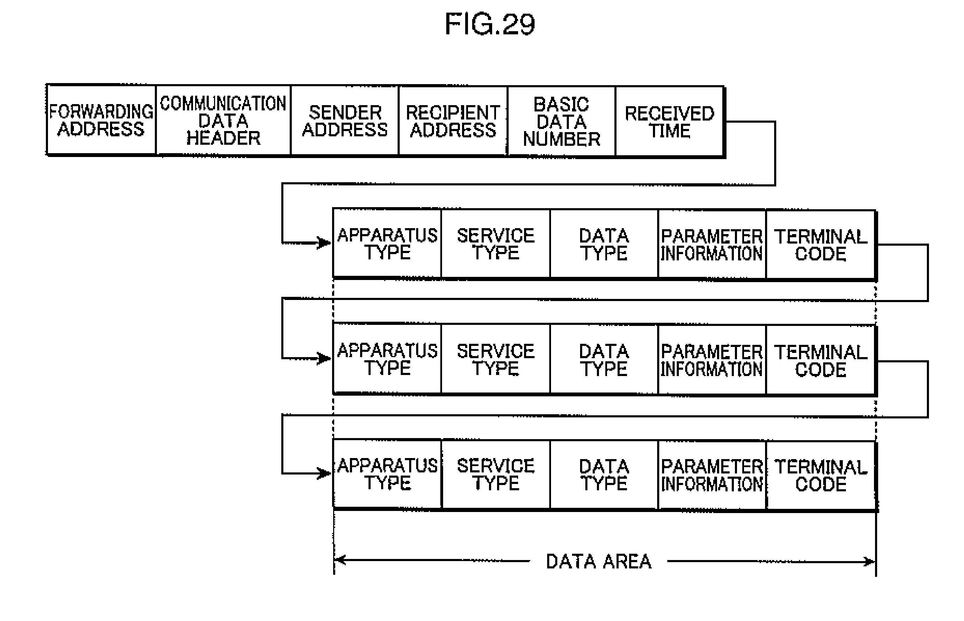

FIG. 29 is an illustration showing an example of a data construction of communication data where the communication data includes complex data having the basic data number of "3" and includes the basic data number information and the received time information. As shown in FIG. 29, the basic data number counting section 17 includes the counted basic data number information after the recipient address of the communication data. At this time, since the basic data number is "3", the value "0x03" is stored. Also, the timer section 18 measures the time when the communication data receiving section 10 has received the communication data, and includes the received time information after the basic data number information of the communication data. In this case, the value "20050401 17:30:00 700ms" is stored as the received time information, for instance.

Next, the communication data receiving section 10 outputs the received communication data to a communication data storage Il. The communication data storage 11 rewrites the destination of the received communication data into the destination in the subnet on the low-speed transmission medium 3 to which the communication data is to be sent, and registers the communication data including the rewritten destination in a communication data table stored in the communication data storage 11 (Step S45).

A time lag may be generated between the time when the router device 1 has received the communication data from the high-speed transmission medium 2, and the time when the router device 1 is about to send the communication data to the low-speed transmission medium 3 due to a difference in processing performance of the transmission media in the case where the communication data accumulated in the router device 1 is sequentially transmitted to the same destination. In such a condition, however, there is a case that the sender wishes to send the communication data at an intended time interval for a specific purpose. Attaching the information representing the time when the router device 1 has received the communication data to the communication data each time the communication data is sequentially transmitted from the router device 1 enables to notify the sender of the time interval concerning the communication data which has been sequentially transmitted to the same destination.

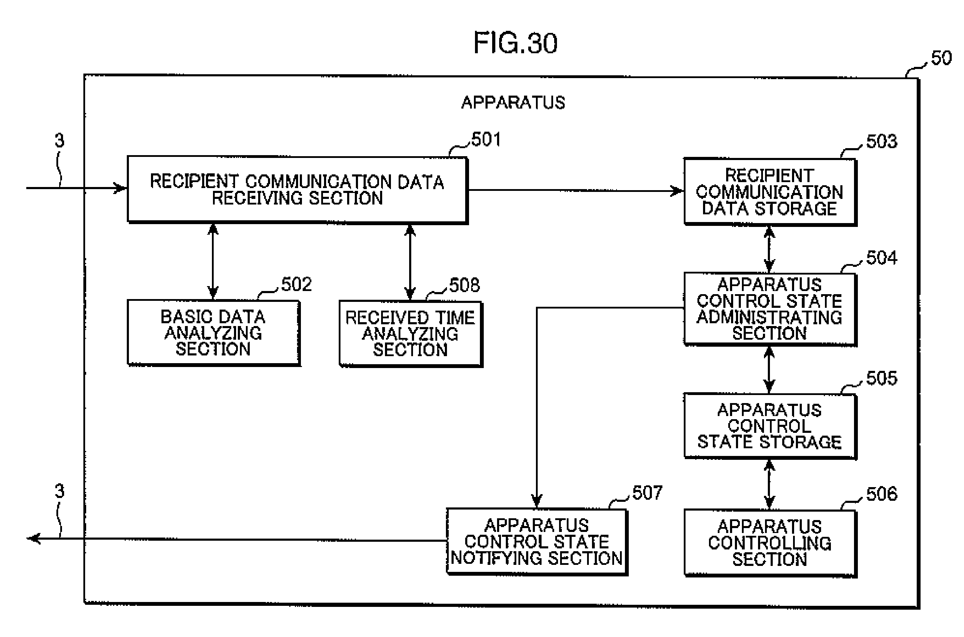

Now, an apparatus as an example of a communication device in the third embodiment is described. FIG. 30 is a block diagram showing an example of an arrangement of the apparatus in the third embodiment. Elements of the apparatus in the third embodiment which are identical or equivalent to those of the apparatus in the first embodiment shown in FIG. 19 have like reference numerals, and description thereof is omitted herein.

The apparatus 50 shown in FIG. 30 includes a recipient communication data receiving section 501, a basic data analyzing section 502, a recipient communication data storage 503, an apparatus control state administrating section 504, an apparatus control state storage 505, an apparatus controlling section 506, an apparatus control state notifying section 507, and a received time analyzing section 508.

The received time analyzing section 508 analyses the received time information included in the communication data received by the recipient communication data receiving section 501, and outputs the information representing the time when the communication data has been received by the router device to the recipient communication data receiving section 501. In this embodiment, the received time analyzing section 508 corresponds to an example of received time analyzing means.

The recipient communication data receiving section 501 includes an analysis result by the received time analyzing section 508, i.e., information representing the time when the communication data has been received by the router device, in the communication data, and causes the recipient communication data storage 503 to store the communication data including the received time information.

Since a processing until the apparatus 50 in the third embodiment stores communication data is identical to the processing shown in FIG. 20, and a control processing to be executed by the apparatus 50 based on the communication data is identical to the processing shown in FIG. 21, description thereof is omitted herein.

In this embodiment, in the case where a communication data transmission controlling section 15 sends a command of sequentially transmitting communication data having the same destination, received time interval information representing a time interval from the time when the previously sent communication data has been received to the time when targeted communication data for transmission has been received may be obtained, and the obtained received time interval information may be included in the communication data for transmission of the secondly received communication data and thereafter, in place of using the received time information. In this modification, the firstly transmitted communication data may not include the received time interval information.

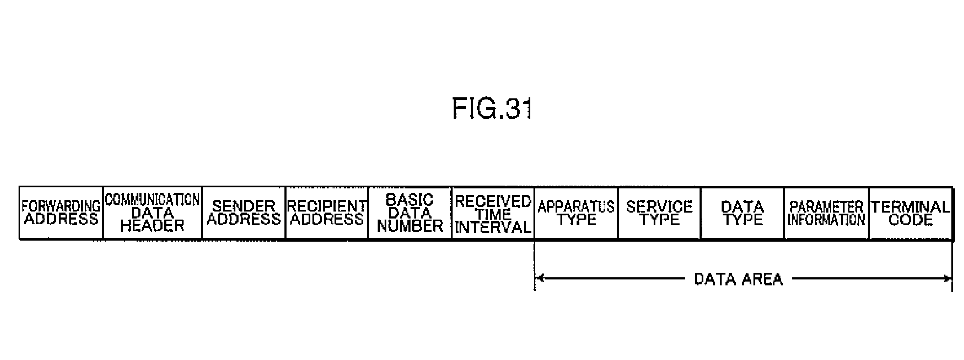

FIG. 31 is an illustration showing an example of a data construction of communication data, wherein the basic data number is "1", and the communication data includes the basic data number information and the received time interval information. The timer section 18 measures the time when the communication data has been received by the router device, and obtains a time interval between the currently acquired received time and the previously acquired received, time. Also, the timer section 18 includes the obtained received time interval information after the basic data number information of the communication data, as a received time interval, In FIG. 31, in the case where the received communication data is firstly transmitted communication data, the value "00:00:00 000ms" is stored as the received time interval, for instance.

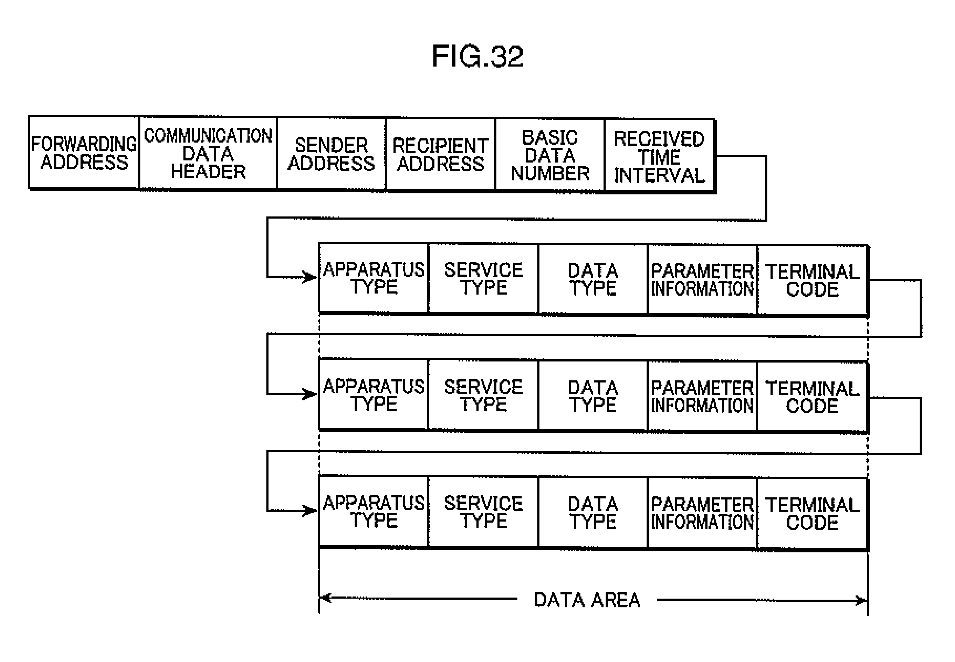

FIG. 32 is an illustration showing an example of a data construction of communication data, wherein the communication data includes complex data having the basic data number of "3'', and includes the basic data number information and the received time interval information. The timer section 18 measures the time when the communication data has been received by the router device, and obtains a time interval between the currently acquired received time and the previously acquired received time. Also, the timer section 18 includes the obtained time interval information after the basic data number information of the communication data, as the received time interval. In FIG. 32, the value "00:00:00 400ms" is stored as the received time interval, for instance. The value represents that the time interval from the time when the previously transmitted communication data has been received to the time when the targeted communication data for transmission has been received is 400 ms.

Alternatively, information representing the time interval from the time when the firstly transmitted communication data has been received to the time when the targeted communication data for transmission has been received may be included in the communication data, in place of the time interval from the time when the previously transmitted communication data has been received to the time when the targeted communication data for transmission has been received.

### (Fourth Embodiment)

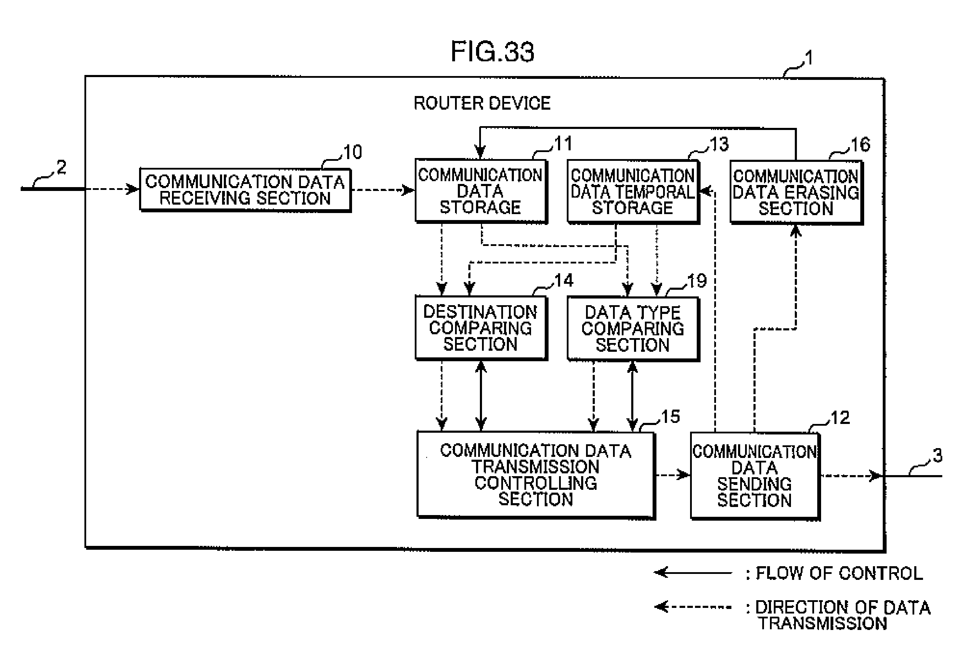

Now, a fourth embodiment of the invention is described HG. 33 is a block diagram showing an arrangement of a router device in accordance with the fourth embodiment, Elements in FIG. 33 which are identical or equivalent to those in FIG. 1 have like reference numerals, and description thereof is omitted herein.

Referring to FIG. 33, the router device 1 is connected to a high-speed transmission medium 2 and a low-speed transmission medium 3. The router device 1 includes a communication data receiving section 10, a communication data storage 11, a communication data sending section 12, a communication data temporal storage 13, a destination comparing section 14, a communication data transmission controlling section 15, a communication data erasing section 16, and a data type comparing section 19.

Basic data included in the communication data includes at least data type information and parameter information. As mentioned in the foregoing embodiments, the data type information represents a type of a control to be implemented, including an operating state of an apparatus such as ON/OFF of a power source, automatic/manual operation of an air conditioner or a like apparatus, operation mode of the apparatus such as cooling or warming, temperature setting, and humidity setting. The parameter information represents setting contents in association with the data type information. For instance, if the data type information represents an operating state of the apparatus, the parameter information represents setting contents such as ON/OFF of the power source. If the data type information represents an operation mode of the air conditioner, the parameter information represents setting contents as to automatic/manual operation of the air conditioner, or setting contents as to cooling or warming. If the data type information represents temperature setting, the parameter information represents a temperature setting value such as 22°C. If the data type information represents humidity setting, the parameter information represents a humidity setting value such as 14°C (sic).

The data type comparing section 19 compares data type information included in communication data stored in the communication data storage 11 with data type information included in communication data stored in the communication data temporal storage 13. In this embodiment, the data type comparing section 19 corresponds to an example of data type comparing means.

The communication data transmission controlling section 15 designates the communication data sending section 12 to transmit the communication data stored in the communication data storage 11 if it is judged that no communication data to be compared is stored in the communication data temporal storage 13. Also, in the case where the communication data temporal storage 13 stores communication data therein, the communication data transmission controlling section 15 extracts the parameter information included in the communication data stored in the communication data storage 11 and designates the communication data sending section 12 to transmit the extracted parameter information if a comparison result by the destination comparing section 14 indicates destination matching, and if a comparison result by the data type comparing section 19 indicates data type matching.

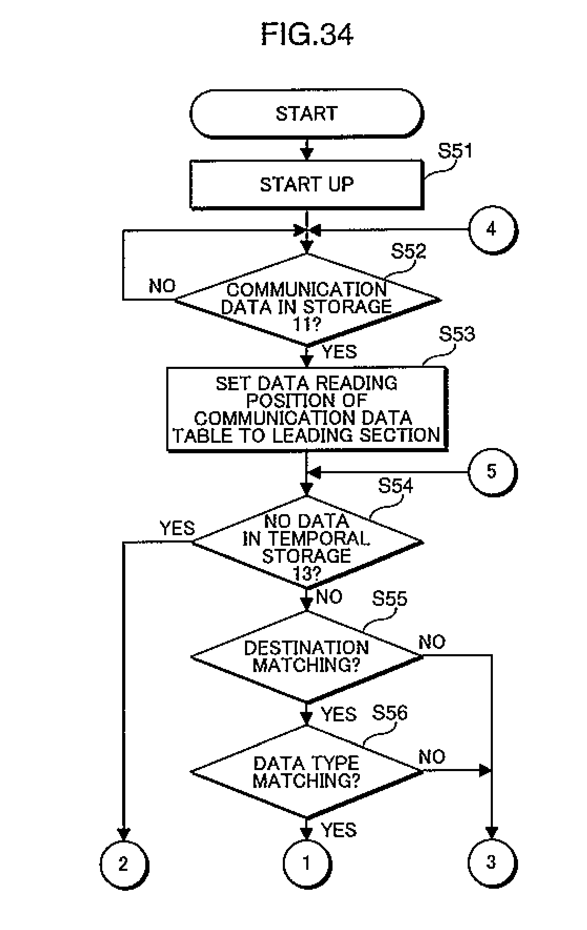

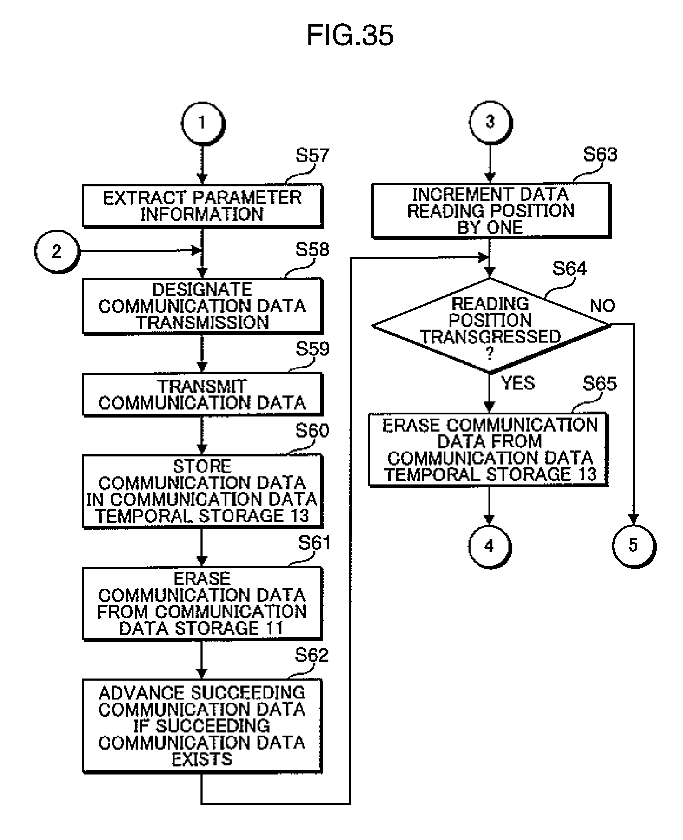

FIGS. 34 and 35 are flowcharts showing an example of a processing until the router device 1 in the fourth embodiment sends communication data. Since a processing until the router device 1 in the fourth embodiment stores the communication data is identical to the processing shown in FIG. 9, description thereof is omitted herein.

A case is described in which the router device 1 sequentially receives three communication data from the high-speed transmission medium 2, the destination and the data type information included in the firstly received communication data and the secondly received communication data are identical to each other, and the destination included in the thirdly received communication data is different from the destination included in the firstly and the secondly received communication data. For sake of explanation, the firstly received communication data is called as first communication data, the secondly received communication data is called as second communication data, and the thirdly received communication data is called as third communication data.

First, after the router device 1 is started up (Step S51), the destination comparing section 14 judges whether the communication data storage 11 stores communication data (Step S52). If it is judged that no communication data is stored in the communication data storage 11 (NO in Step S52), the destination comparing section 14 cyclically repeats the judgment in Step S52 at a predetermined time interval until communication data is stored in the communication data storage 11.

If, on the other hand, it is judged that communication data is stored in the communication data storage 11 (YES in Step S52), the destination comparing section 14 sets the data reading position of a communication data table stored in the communication data storage 11 as an internal variable to a leading section of the communication data table (Step S53). Then, the destination comparing section 14 judges whether communication data is stored in the communication data temporal storage 13 (Step S54). If it is judged that communication data is stored in the communication data temporal storage 13 (NO in Step S54), the routine goes to Step S55.

Since no communication data is stored in the communication data temporal storage 13, the destination comparing section 14 judges that no communication data is stored in the communication data temporal storage 13 (YES in Step S54). Then, the communication data transmission controlling section 15 outputs, to the communication data sending section 12, the communication data at the data reading position of the communication data table, which is stored as the internal variable in the communication data storage 11, namely the communication data at a leading section of the communication data table (Step S58). Subsequently the communication data sending section 12 sends the received communication data to the subnet on the low-speed transmission medium 3 (Step S59).

Next, the communication data sending section 12 outputs the communication data to the communication data temporal storage 13, which, in turn, stores the communication data sent by the communication data sending section 12 (Step S60). Then, the communication data erasing section 16 erases the communication data at the data reading position of the communication data table, namely, the communication data at the leading section of the communication data table from the communication data storage 11 (Step S61).

In the case where there is communication data succeeding the erased communication data in the communication data table, the communication data storage 11 advances the succeeding communication data to the leading section of the communication data table (Step S62). As a result of the processing, the data reading position of the communication data table corresponds to the position of the secondly located communication data in the communication data table i.e. the position of the second communication data. Then, the destination comparing section 14 judges whether the data reading position of the communication data table transgresses the position of the rearmost communication data (Step S64). If it is judged that the data reading position of the communication data table does not transgress the position of the rearmost communication data (NO in Step S64), the routine goes to Step S54.

Since the first communication data is stored in the communication data temporal storage 13, the destination comparing section 14 judges that communication data is stored in the communication data temporal storage 13 (NO in Step S54). Then, the destination comparing section 14 compares the destination of the communication data at the data reading position of the communication data table i.e. the destination of the second communication data with the destination of the communication data stored in the communication data temporal storage 13 i.e. the destination of the first communication data (Step S55).

If it is judged that the destination of the communication data at the data reading position of the communication data table coincides with the destination of the communication data stored in the communication data temporal storage 13 (YES in Step S55), the data type comparing section 19 compares the data type information of the communication data at the data reading position of the communication data table i.e. the data type information of the second communication data with the data type information of the communication data stored in the communication data temporal storage 13 i.e. the data type information of the first communication data (Step S56).

If it is judged that the data type information of the communication data at the data reading position of the communication data table coincides with the data type information of the communication data stored in the communication data temporal storage 13 (YES in Step S56), the communication data transmission controlling section 15 extracts the parameter information from the communication data (Step S57).

Then, the communication data transmission controlling section 15 outputs the extracted parameter information to the communication data sending section 12 as communication data to be transmitted (Step S58). In response to the control the communication data sending section 12 sends the received communication data i.e. the parameter information to the subnet on the law-speed transmission medium 3 (Step S59).

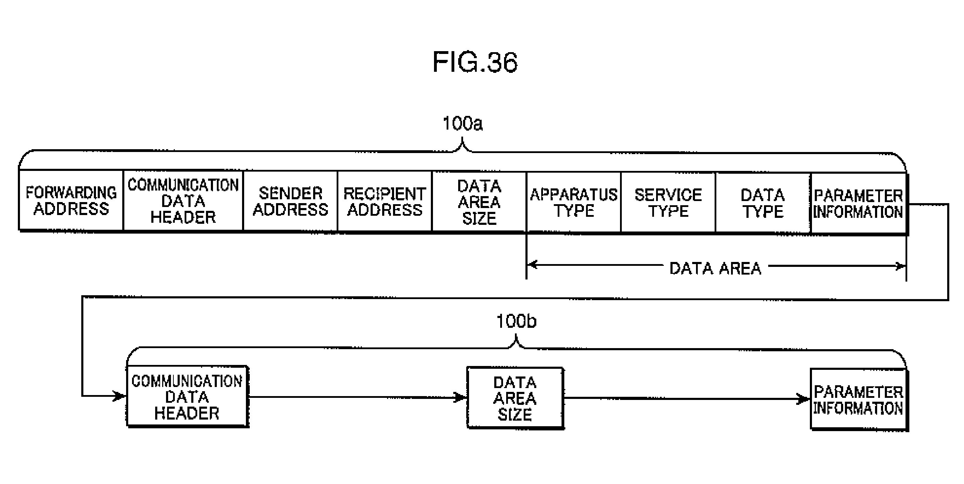

FIG. 36 is an illustration showing an example of a data construction of communication data to be transmitted in the fourth embodiment. As shown in FIG. 36, in the case where first communication data 100a and second communication data 100b having the same destination and the same data type information are sequentially transmitted, the communication data transmission controlling section 15 erases the forwarding address information, the sander address information, and the recipient address information from the second communication data 100b, and also erases the apparatus type information, the service type information, and the data type information included in the basic data.

As a result of the above processing, the second communication data 100b which is transmitted sequentially after the first communication data 100a is constituted of the communication data header information, data area size information, and parameter information. In this case, the communication data header information in the second communication data 100b includes information for discriminating whether the recipient address is a single address or a multiple address, a hop counter value for routing, and information for discriminating whether the data area is constituted of basic data or solely constituted of parameter information. In the case where the data construction of the communication data is as shown in FIG. 4, transmission of the data area size information may be omitted.

The first communication data 100a and the second communication data 100b in FIG. 36 each has a data area constituted of single basic data. If complex data having a data area constituted of plural basic data is used, the contents of the data area is as shown in FIG. 5.

Referring back to FIG. 35, the communication data sending section 12 outputs the received communication data to the communication data temporal storage 13. Then, the communication data temporal storage 13 stores the communication data at the data reading position of the communication data table, namely, stores the second communication data (Step S60). Then, the communication data erasing section 16 erases the communication data at the data reading position of the communication data table, namely, erases the second communication data at the leading section of the communication data table (Step S61).

In the case where there is communication data succeeding the erased communication data in the communication data table, the communication data storage 11 advances the succeeding communication data i.e. the third communication data to the leading section of the communication data table for storage (Step S62). As a result of the processing, the data reading position of the communication data table corresponds to the position of the forwardmost communication data in the communication data table i.e. the position of the third communication data. Then, the destination comparing section 14 judges whether the data reading position of the communication data table transgresses the position of the rearmost communication data (Step S64). If it is judged that the data reading position of the communication data table does not transgress the position of the rearmost communication data (NO in Step S64), the routine goes to Step S54.

Then, the destination comparing section 14 judges that communication data is stored in the communication data temporal storage 13 because the first communication data is stored in the communication data temporal storage 13 (NO in Step S54). Next, the destination comparing section 14 compares the destination of the communication data at the data reading position of the communication data table i.e. the destination of the third communication data with the destination of the communication data stored in the communication data temporal storage 13 i.e. the destination of the first communication data (Step S55).

If it is judged that the destination of the communication data at the data reading position of the communication data table, and the destination of the communication data stored in the communication data temporal storage 13 do not coincide with each other (NO in Step S55), the destination comparing section 14 increments the data reading position of the communication data table by one (Step S63). Next the destination comparing section 14 judges whether the data leading position of the communication data table transgresses the data reading position of the rearmost communication data (Step S64). In this case, the data reading position of the communication data table corresponds to the position of the secondly located communication data in the communication data table, i.e. the position of the third communication data, and the data reading position of the communication data table transgresses the position of the rearmost communication data. Accordingly, it is judged that the data reading position of the communication table data transgresses the data reading position of the rearmost communication data (YES in Step S64), and the destination comparing section 14 erases the communication data stored in the communication data temporal storage 13, namely erases the second communication data (Step S65).

Next, the destination comparing section 14 judges whether communication data is stored in the communication data storage 11 (Step S52). Since the third communication data is stored in the communication data storage 11, the destination comparing section 14 judges that communication data is stored in the communication data storage 11 (YES in Step S52). Then, the destination comparing section 14 sets the data reading position of the communication data table, which is stored in the communication data storage 11 as an internal variable, to a leading section of the communication data table (Step S53).

Next, the destination comparing section 14 judges whether communication data is stored in the communication data temporal storage 13 (Step S54). Since no communication data is stored in the communication data temporal storage 13, the destination comparing section 14 judges that no communication data is stored in the communication data temporal storage 13 (YES in Step S54). Then, the communication data transmission controlling section 15 outputs, to the communication data sending section 12, the communication data at the data reading position of the communication data table, which is stored in the communication data storage 11 as the internal variable i.e. the third communication data at the leading section of the communication data table (Step S58). Then, the communication data sending section 12 sends the received third communication data to the subnet on the low-speed transmission medium 3 (Step S59).

Next, the communication data sending section 12 outputs the third communication data to the communication data temporal storage 13, which, in turn, stores the third communication data sent by the communication data sending section 12 (Step S60). Then, the communication data erasing section 16 erases the third communication data at the data reading position of the communication data table from the communication data storage 11 (Step S61). In this case, since all the communication data have been processed, and there is no communication data succeeding the third communication data, the communication data storage 11 does not perform advancement (Step S62). This state is equivalent to a condition that the data reading position of the communication data table transgresses the position of the rearmost communication data (YES in Step S64) because all the communication data have been processed. Accordingly, the destination comparing section 14 erases the communication data stored in the communication data temporal storage 13, namely, erases the third communication data (Step S65).

There are assumed various designations concerning communication contents in the case where the temperature setting of the air conditioner or a like apparatus is changed from 16°C to 27°C including a case that a control signal of raising the temperature by 1°C is transmitted eleven times, and a case that a target temperature is incremented by one such as 17°C, 18°C, 19°C,..., and 27°C. Under the above condition, in the case where the data type information is identical between the sequentially transmitted communication data, communication contents substantially having no difference in temperature value itself, such as information indicating that the control is directed to temperature setting, are sequentially transmitted, even if the temperature value itself is different e.g. one case uses "1°C" as designation on temperature raising, and the other case uses "17°C" as a set temperature, which resultantly increases a load to the traffic of a transmission medium having a limited communications traffic. In this embodiment, however, in the case where the data type information is identical to each other, merely parameter values which are different from each other are sequentially transmitted, without transmitting the remaining parts identical to each other except for the parameter values. This arrangement enables to reduce a processing load to the router device, and the traffic of the transmission medium.

Now, an apparatus as an example of a communication device in the fourth embodiment is described. Since the arrangement, of the apparatus in the fourth embodiment is identical to that of the apparatus shown in FIG. 19, the apparatus in the fourth embodiment is described referring to FIG. 19. Further, description on the arrangement of the apparatus in the fourth embodiment that is identical or equivalent to that of the apparatus in the first embodiment is omitted herein.

In the case where the received communication data includes single basic data and at least one parameter information, a recipient communication data receiving section 501 copies the basic data by the number corresponding to the number of the parameter information, replaces the parameter information included in the copied basic data with the received parameter information, and interprets that the received communication data is constituted of the leading basic data, and the basic data of the number corresponding to the number of the received parameter information.

Since a processing until the apparatus 50 in the fourth embodiment stores the communication data is the same as the processing shown in FIG. 20, and a control processing to be executed by the apparatus 50 in the fourth embodiment based on the communication data is the same as the processing shown in FIG. 21, description thereof is omitted herein.

Alternatively, in the case where the received communication data includes single basic data and at least one parameter information, the recipient communication data receiving section 501 may interpret that the received communication data includes the leading basic data, and that the communication data whose data type information is identical to that of the basic data and whose parameter information is different from that of the basic data has been received by the number corresponding to the number of the parameter information.

In this embodiment, the communication data temporal storage 13 stores the communication data each time the communication data sending section 12 sends the communication data. Alternatively, in the case where the destination and the data type information of the communication data sent by the communication data sending section 12, and the destination and the data type information of the communication data already stored in the communication data temporal storage 13 are identical to each other, storing of the communication data sent by the communication data sending section 12 may be omitted.

In this embodiment, in the case where the data type information is identical between the sequentially transmitted communication data, merely the parameter values are sequentially transmitted. Alternatively in the case where two parameter values are alternately transmitted e.g. ON/OFF signals of the air conditioner or a like apparatus are alternately and repetitively transmitted due to erroneous manipulation, and if the repetitive transmission is conducted for a specific purpose, the communication data may include information indicating that the two parameter values are alternately transmitted, the two parameters values that are transmitted alternately, e.g. the value representing "ON" and the value representing "OFF", and information representing the number of times of repeating the operation. Further alternatively, a plural value other than two may be designated.

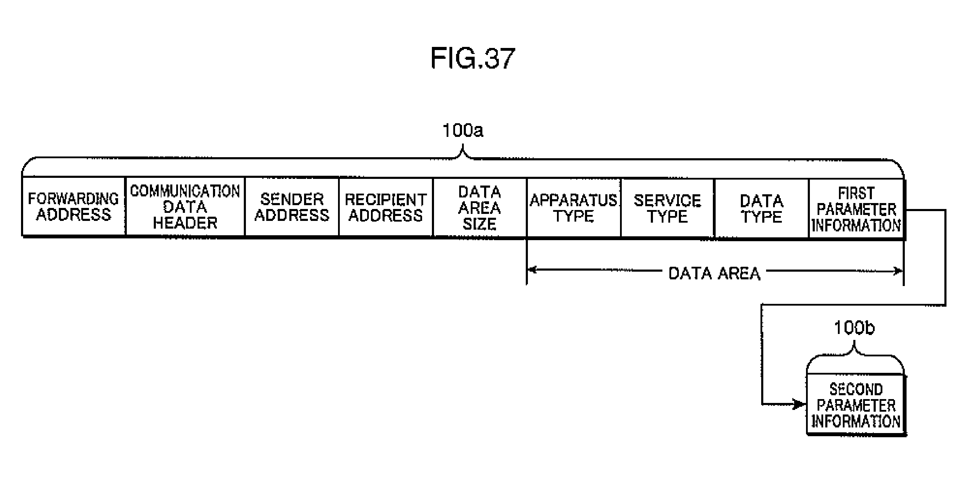

FIG. 37 is an illustration showing an example of a data construction of communication data in the case where different parameter information is repetitively transmitted. For instance, there is a case that first communication data 100a and second communication data 100b having the same destination and the same data type information are sequentially transmitted, and first parameter information included in the first communication data 100a, and second parameter information included in the second communication data 100b represent two values different from each other. Then, as shown in FIG. 37, the communication data transmission controlling section 15 erases the forwarding address information, the communication data header information, the sender address information, the recipient address information, and the data area size information from the second communication data 100b, and also erases the apparatus type information, the service type information, and the data type information included in the basic data.

As a result of the processing, the second parameter information of the second communication data is transmitted immediately after the first communication data including the first parameter information. At this time, the communication data header information of the first communication data 100a includes information for discriminating whether the recipient address is a single address or a multiple address, the hop-counter value for routing, information for discriminating whether repeating of the data area is designated, and information representing the number of times of repeating the designation of the data area.

The first communication data 100a and the second communication data 100b in FIG. 37 each has a data area constituted of single basic data. If complex data having a data area constituted of plural basic data is used, the contents of the data area is as shown in FIG. 5.

In this embodiment, in the case where the data type information is identical between the sequentially transmitted communication data, merely the parameter values are sequentially transmitted. Alternatively, in the case where ON/OFF signals are alternately and repetitively transmitted in control of the air conditioner or a like apparatus, if solely the final control is validated, and all the controls on the same data type except for the final control are invalidated in the course of the sequential data transmission, communication data having the same data type information may be discarded during the sequential data transmission, as far as the data type information is identical.

In the above case, if plural communication data having the same data type information are received, and if the parameter value of the firstly received communication data and the parameter value of the lastly received communication data are identical to each other, all the communication data except for the firstly received communication data is discarded, and solely the firstly received communication data is transmitted. Also, if plural communication data having the same data type information are received, and the parameter value of the firstly received communication data and the parameter value of the lastly received communication data are different from each other, all the communication data except for the lastly received communication data are discarded, and merely the lastly received communication data is transmitted- Alternatively, the data type information may be discriminated, and judgment may be made as to whether the parameter value is discarded or sequentially transmitted.

The router device 1 in the fourth embodiment may further include a basic data number counting section 17 and a timer section 18 corresponding to the equivalent elements in the third embodiment. In the altered arrangement, communication data having the same destination are sequentially read out among the communication data stored in the communication data storage 11, and comparison is made between the data type information of the firstly transmitted communication data and the data type information of the other communication data that are sequentially transmitted to the same destination. If the comparison result indicates that the data type information is identical, solely the parameter information, the basic data number information, and the received time information are transmitted. Alternatively, communication data having the same data type information may be extracted from the communication data having the same destination with respect to each of the data type information, and solely the parameter information, the basic data number information, and the received time information may be transmitted.

In this embodiment, communication data having the same destination and the same data type information are sequentially transmitted among all the communication data in the communication data table. Alternatively, it is possible to sequentially transmit communication data having the same destination and the same data type information among all the communication data in the communication data table, immediately followed by sequentially transmission of communication data having the same destination among the remaining communication data in the communication data table.

In this embodiment, communication data having the same destination and the same data type information are sequentially transmitted among all the communication data in the communication data table. Alternatively, in light of a processing load, it is possible to send parameter information in the case where the destination and the data type information are identical between the previously transmitted communication data and the targeted communication data to be transmitted from the leading section of the communication data table one by one, and to transmit the communication data whose destination is the same but whose data type information is different between the previously transmitted communication data and the targeted communication data to be transmitted.

### (Fifth Embodiment)

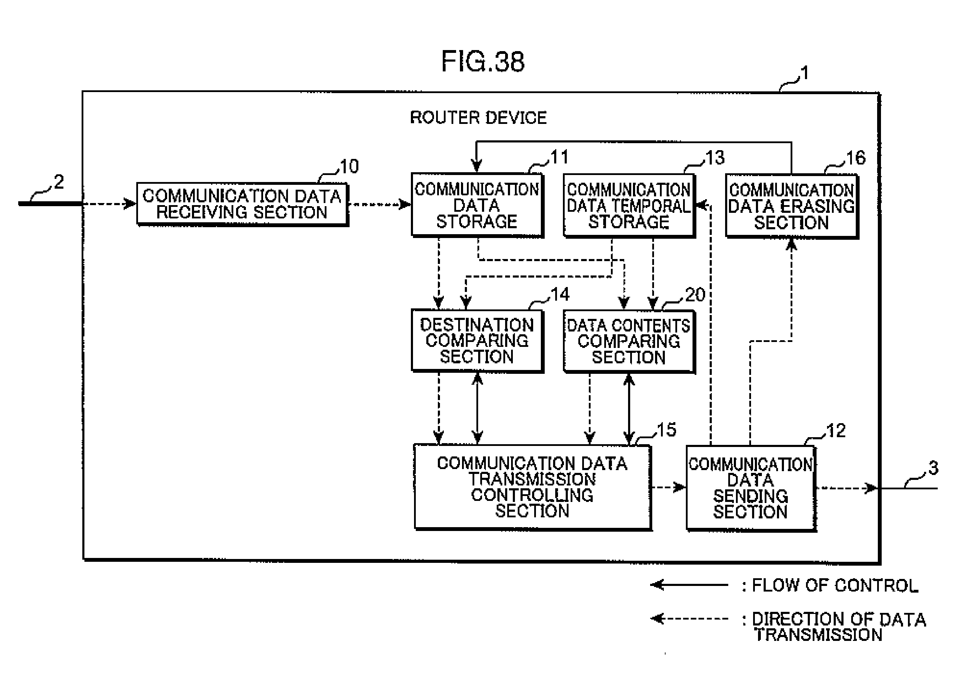

Now, a fifth embodiment of the invention is described. FIG. 38 is a block diagram showing an arrangement of a router device in accordance with the fifth embodiment. Elements in FIG. 38 which are identical or equivalent to those in FIG. 1 have like reference numerals, and description thereof is omitted herein.

Referring to FIG. 38, the router device 1 is connected to a high-speed transmission medium 2 and a low-speed transmission medium 3. The router device 1 includes a communication data receiving section 10, a communication data storage 11, a communication data sending section 12, a communication data temporal storage 13, a destination comparing section 14, a communication data transmission controlling section 15, a communication data erasing section 16, and a data contents comparing section 20.

The data contents comparing section 20 compares data contents of communication data stored in the communication data temporal storage 13 (sic) with data contents of communication data stored in the communication data temporal storage 13. In this embodiment, the data contents comparing section 20 corresponds to an example of data contents comparing means.

The communication data transmission controlling section 15 counts the number of the communication data having the same destination and the same data contents, as a result of comparison by the destination comparing section 14 between the destination of communication data stored in the communication data storage 11 and the destination of communication data stored in the communication data temporal storage 13, and as a result of comparison by the data contents comparing section 20 between the data contents of communication data stored in the communication data storage 11 and the data contents of communication data stored in the communication data temporal storage 13, and designates the communication data sending section 12 to transmit the information representing the counted number of the communication data having the same destination and the same data contents.

The data contents represent data in a data area. The data contents comparing section 20 compares the data in the data area of the communication data stored in the communication data temporal storage 13 (sic) with the data in the data area of the communication data stored in the communication data temporal storage 13. The communication data transmission controlling section 15 counts the number of the communication data having the same data in the data area, as a result of comparison by the data contents comparing section 20 between the data in the data area of the communication data stored in the communication data temporal storage 13 (sic) with the data in the data area of the communication data stored in the communication data temporal storage 13, and designates the communication data sending section 12 to transmit the information representing the counted number of the communication data having the same data.

A processing until the router device 1 in the fifth embodiment stores communication data is described referring to FIG. 9. A case is described in which the router device 1 sequentially receives three communication data from the high-speed transmission medium 2, the destinations and the data contents of the firstly received communication data and the thirdly received communication data are identical to each other, and the destination of the secondly received communication data is different from the destination of the firstly received communication data. For sake of explanation, the firstly received communication data is called as first communication data, the secondly received communication data is called as second communication data, and the thirdly received communication data is called as third communication data.

Referring to FIG. 9, after the router device 1 is started up (Step S1), it is judged whether the communication data receiving section 10 has received the first communication data from the high-speed transmission medium 2 (Step S2). If it is judged that the communication data receiving section 10 has not received the first communication data from the high-speed transmission medium 2 (NO in Step S2), the communication data receiving section 10 cyclically repeats the judgment in Step S2 at a predetermined time interval until the first communication data is received.

If, on the other hand, it is judged that the communication data receiving section 10 has received the first communication data from the high-speed transmission medium 2 (YES in Step S2), the communication data receiving section 10 outputs the received communication data to the communication data storage 11. In response to receiving the communication data, the communication data storage 11 rewrites the destination of the received first communication data into a destination in the subnet on the low-speed transmission medium 3 to which the communication data is to be sent, and attaches the first communication data including the rewritten destination to the tail section of the communication data table stored in the communication data storage 11 for registration (Step S3).

Similarly to the above case, in the case where the communication data are sequentially received, the communication data storage 11 rewrites the destination of the received communication data into the destination in the subnet on the low-speed transmission medium 3 to which the communication data is to be sent, and attaches the communication data including the rewritten destination to the tail section of the communication data table stored in the communication data storage 11 for registration. The three communication data i.e. the first communication data, the second communication data, and the third communication data are stored in this order in the communication data table stored in the communication data storage 11.

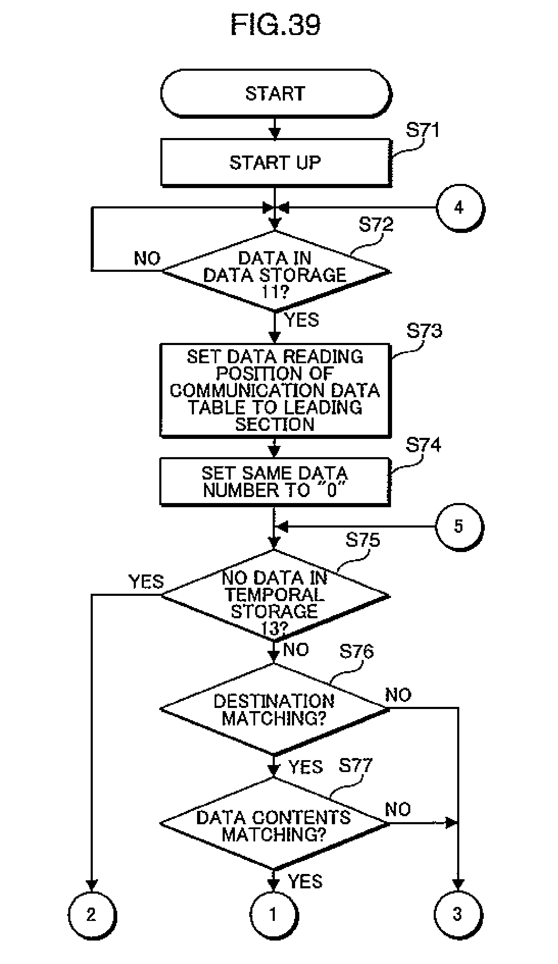

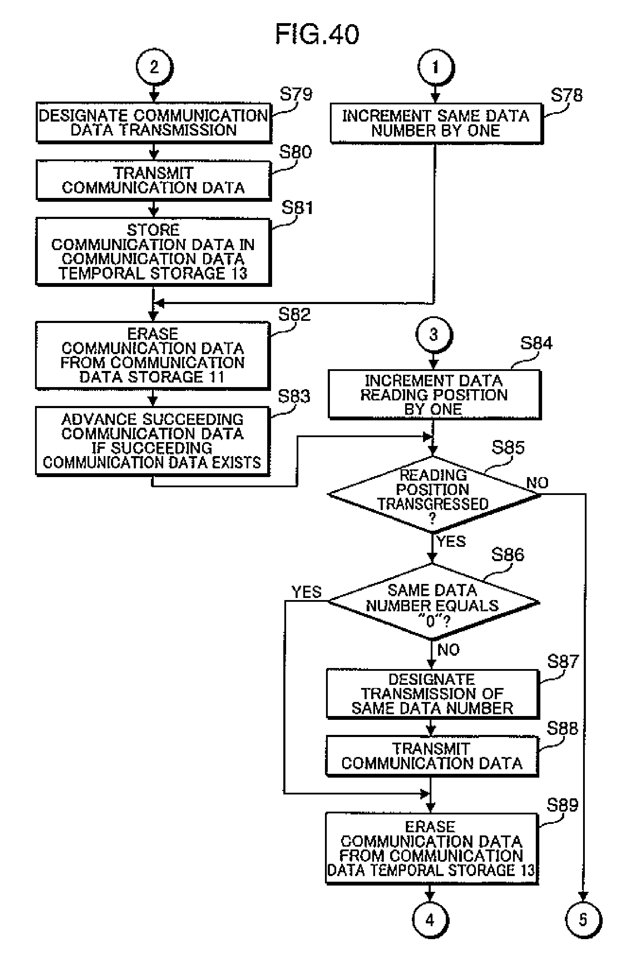

Now, a processing until the router device 1 sends the communication data is described. FIGS. 39 and 40 are flowcharts showing an example of a processing until the router device 1 in the fifth embodiment sends communication data.

First, after the router device 1 is started up (Step S71), the destination comparing section 14 judges whether communication data is stored in the communication data storage 11 (Step S72). If it is judged that no communication data is stored in the communication data storage 11 (NO in Step S72), the destination comparing section 14 cyclically repeats the judgment in Step S72 at a predetermined time interval until communication data is stored.

If, on the other hand, it is judged that communication data is stored in the communication data storage 11 (YES in Step S72), the destination comparing section 14 sets the data reading position of the communication data table, which is stored in the communication data storage 11 as an internal variable, to a leading section of the communication data table (Step S73).

Then, the communication data transmission controlling section 15 sets the number of the communication data having the same data stored therein as an internal variable to "0" (Step S74). Then, the destination comparing section 14 judges whether communication data is stored in the communication data temporal storage 13 (Step S75). If it is judged that communication data is stored in the communication data temporal storage 13 (NO in Step 875), the routine proceeds to Step 876.

If, on the other hand, it is judged that communication data is not stored in the communication data temporal storage 13 because no communication data is stored in the communication data temporal storage 13 (YES in Step 875), the communication data transmission controlling section 15 outputs, to the communication data sending section 12, the communication data at the data reading position of the communication data table, which is stored as the internal variable in the communication data storage 11, i.e., the first communication data at the leading section of the communication data table (Step S79). In response to the control, the communication data sending section 12 sends the received first communication data to the subnet on the low-speed transmission medium 3 (Step S80).

Subsequently the communication data sending section 12 outputs the communication data to the communication data temporal storage 13. The communication data temporal storage 13 stores therein the first communication data sent by the communication data sending section 12 (Step S81). Then, the communication data erasing section 16 erases the communication data at the data reading position of the communication data table, namely erases the first communication data at the leading section of the communication data table from the communication data storage 11 (Step S82).

Next, in the case where there is communication data succeeding the erased communication data in the communication data table, the communication data storage 11 advances the succeeding communication data i.e. the second communication data and the third communication data for storage (Step S83). As a result of the processing, the data reading position of the communication data corresponds to the position of the secondly located communication data in the communication data table i.e. the position of the second communication data. Then, the destination comparing section 14 judges whether the data reading position of the communication data table transgresses the position of the rearmost communication data (Step S85). If it is judged that the data reading position of the communication data table does not transgress the position of the rearmost communication data (NO in Step S85), the routine goes to Step S75.

Then, the destination comparing section 14 judges that communication data is stored in the communication data temporal storage 13 because the first communication data is stored in the communication data temporal storage 13 (NO in Step S75). Next, the destination comparing section 14 compares the destination of the communication data at the data reading position of the communication data table i.e, the destination of the second communication data with the destination of the communication data stored in the communication data temporal storage 13 i.e. the destination of the first communication data (Step S76).

If it is judged that the destination of the communication data at the data reading position of the communication data table, and the destination of the communication data stored in the communication data temporal storage 13 do not coincide with each other (NO in Step 876), the destination comparing section 14 increments the data reading position of the communication data table by one (Step S84). In this case, since the destination of the second communication data at the data reading position of the communication data table, and the destination of the first communication data stored in the communication data temporal storage 13 do not coincide with each other, the destination comparing section 14 increments the data reading position of the communication data table by one,

Next, the destination comparing section 14 judges whether the data reading position of the communication data table transgresses the data reading position of the rearmost communication data (Step S85). In this case, the data reading position of the communication data table corresponds to the position of the secondly located communication data in the communication data table, i.e. the position of the third communication data, and the data reading position of the communication data table does not transgress the position of the rearmost communication data. Accordingly, it is judged that the data reading position of the communication table data does not transgress the position of the rearmost communication data (NO in Step S85), and the routine goes to Step S75.

Next, the destination comparing section 14 judges that communication data is stored in the communication data temporal storage 13 because the first communication data is stored in the communication data temporal storage 13 (NO in Step S75). Then, the destination comparing section 14 compares the destination of the communication data at the data reading position of the communication data table i.e. the destination of the third communication data with the destination of the communication data stored in the communication data temporal storage 13 i.e. the destination of the first communication data (Step S76).

In the case where the destination of the communication data at the data reading position of the communication data table, and the destination of the communication data stored in the communication data temporal storage 13 coincide with each other (YES in Step S76), the data contents comparing section 20 compares the data contents of the communication data at the data reading position of the communication data table with the data contents of the communication data stored in the communication data temporal storage 13 (Step S77). In this case, since the destination of the third communication data at the data reading position of the communication data table and the destination of the first communication data stored in the communication data temporal storage 13 coincide with each other, the data contents comparing section 20 compares the data contents of the first and the third communication data having the same destination.

If it is judged that the data contents of the communication data at the data reading position of the communication data table and the data contents of the communication data stored in the communication data temporal storage 13 coincide with each other (YES in Step S77), the communication data transmission controlling section 15 increments the same data number representing the number of the communication data having the same data contents, by one (Step S78). In this case, since the data contents of the third communication data at the data reading position of the communication data table and the data contents of the first communication data stored in the communication data temporal storage 13 coincide with each other, the communication data transmission controlling section 15 increments the same data number by one.

Next, the communication data erasing section 16 erases the communication data at the data reading position of the communication data table, namely, erases the third communication data from the communication data storage 11 (Step S82).

Next, in the case where there is communication data succeeding the erased communication data in the communication data table, the communication data storage 11 advances the succeeding communication data for storage. In this case, since solely the second communication data remains at the leading section of the communication data table, and there is no succeeding communication data, the communication data storage 11 does not perform advancement (Step S83). As a result of the processing, the data reading position of the communication data table corresponds to the position of the secondly located communication data in the communication data table i.e. the position of the communication data succeeding the second communication data. Since the data reading position of the communication data table transgresses the position of the rearmost communication data (YES in Step S85), the routine goes to Step S86.

Next, the communication data transmission controlling section 15 judges whether the same data number, which is stored in the communication data storage 11 as the internal variable, is "0" (Step S86). If it is judged that the same data number is "0" (YES in Step S86), the routine proceeds to Step S89.

If, on the other hand, it is judged that the same data number is not "0"' (NO in Step S86), the communication data transmission controlling section 15 outputs the value of the same data number to the communication data sending section 12 (Step S87). In this case, since the value "1" of the same data number is stored as the internal variable, the communication data transmission controlling section 15 outputs the value "1" of the same data number to the communication data sending section 12. Upon receiving the value, the communication data sending section 12 sends the value "1" of the same data number to the subnet on the low-speed transmission medium 3 (Step S88).

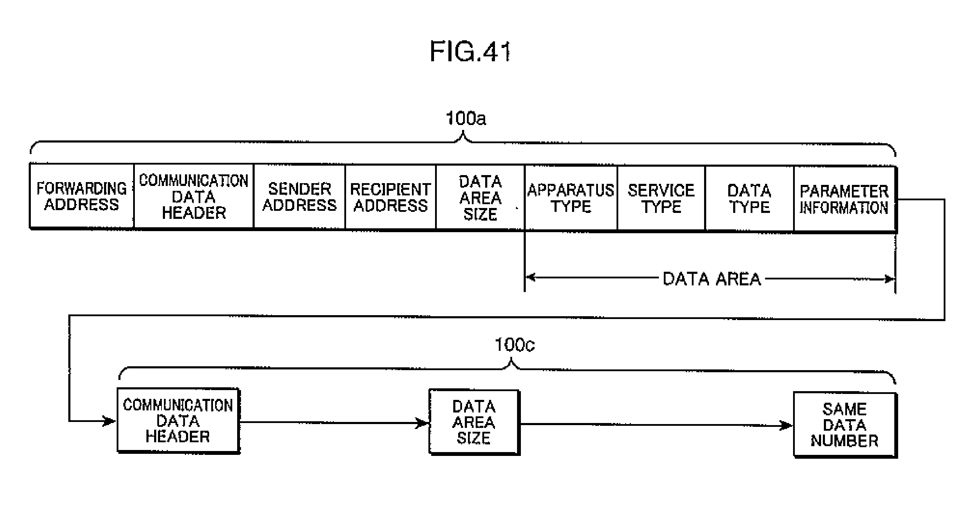

FIG. 41 is an illustration showing an example of a data construction of communication data to be transmitted in the fifth embodiment. As shown in FIG. 41, in the case where first communication data 100a and third communication data 100c having the same destination and the same data contents are sequentially transmitted, the communication data transmission controlling section 15 crases the forwarding address information, the sender address information, the recipient address information, and the basic data including the apparatus type information, the service type information, the data type information, and the parameter information from the third communication data, and includes the same data number information in the communication data.

As a result of the processing, the third communication data 100c which is transmitted sequentially after the first communication data 100a is constituted of the communication data header information, the data area size information, and the same data number information. In this case, the communication data header of the third communication data 100c includes information for discriminating whether the recipient address is a single address or a multiple address, a hop counter value for routing, information for discriminating whether the data area represents single basic data or complex data, and information for discriminating whether the data area is solely constituted of the same data number information. In the case where the data construction of the communication data is as shown in FIG. 4, transmission of the data area size information may be omitted.

The first communication data 100a and the third communication data 100c in FIG. 41 each has a data area constituted of single basic data. In the case where complex data having a data area constituted of plural basic data is used, the contents of the data area is as shown in FIG. 5.

Referring back to FIG. 40, the destination comparing section 14 erases the communication data stored in the communication data temporal storage 13, namely, erases the first communication data (Step S89). Then, the destination comparing section 14 judges whether communication data is stored in the communication data storage 11 (Step S72). Since the second communication data is stored in the communication data storage 11, the destination comparing section 14 judges that communication data is stored in the communication data storage 11 (YES in Step S72), and sets the data reading position of the communication data table to the leading section of the communication data table (Step S73).

Then, the communication data transmission controlling section 15 sets the same data number stored therein as the internal variable to "0" (Step S74). Then, the destination comparing section 14 judges whether communication data is stored in the communication data temporal storage 13 (Step S75). Since no communication data is stored in the communication data storage 13, the destination comparing section 14 judges that no communication data is stored in the communication data temporal storage 13 (YES in Step S75). Then, the communication data transmission controlling section 15 outputs, to the communication data sending section 12, the communication data at the data reading position of the communication data table i.e. the second communication data at the leading section of the communication data table (Step S79). Upon receiving the second communication data, the communication data sending section 12 sends the received second communication data to the subnet on the low-speed transmission medium 3 (Step S80).

Next, the communication data sending section 12 outputs the second communication data to the communication data temporal storage 13, which, in turn, stores the second communication data sent by the communication data sending section 12 (Step S81). Then, the communication data erasing section 16 erases the communication data at the data reading position of the communication data table, namely, erases the second communication data from the communication data storage 11 (Step S82). In this case, since all the communication data have been processed, and there is no succeeding communication data, the communication data storage 11 does not perform advancement (Step S83).

After all the communication data have been processed, which is equivalent to a condition that the data reading position of the communication data table transgresses the position of the rearmost communication data (YES in Step S85), the communication data transmission controlling section 15 judges whether the same data number is '"0" (Step S86). The communication data transmission controlling section 15 judges that the same data number is "0" (YES in Step S86). The destination comparing section 14 erases the communication data stored in the communication data temporal storage 13, namely, erases the second communication data (Step S89).

In the above arrangement, in the case where communication data having the same data contents are sequentially transmitted, solely the same data number information representing the number of the communication data having the same data contents to be transmitted sequentially is transmitted to the transmission medium by counting the number of the communication data having the same data contents, and by including the same data number information in the communication data, in place of repetitively transmitting the communication data having the same data contents to the transmission medium. This arrangement enables to reduce a communications traffic to the subnet to which the communication data is to be sent, and to reduce a communication load to the network.

Now, an apparatus as an example of a communication device in the fifth embodiment is described. Since the arrangement of the apparatus in the fifth embodiment is identical to that of the apparatus shown in FIG. 19, the apparatus in the fourth (sic) embodiment is described referring to FIG. 19. Further, description on the arrangement of the apparatus in the fifth embodiment that is identical or equivalent to that of the apparatus in the first embodiment is omitted.

In the case where the received communication data includes single basic data and the same data number information, a recipient communication data receiving section 501 copies the basic data by the number corresponding to the same data number, and interprets the plural basic data individually. Also, the recipient communication data receiving section 501 stores the leading basic data, and the copied basic data of the number corresponding to the same data number into a recipient communication data storage 503,

Since a processing until the apparatus 50 in the fifth embodiment stores the communication data is the same as the processing shown in FIG. 20, and a control processing to be executed by the apparatus 50 in the fifth embodiment based on the communication data is the same as the processing shown in FIG. 21, description thereof is omitted herein.

Alternatively, in the case where the received communication data includes single basic data and the same data number information, the recipient communication data receiving section 501 may interpret that the received communication data includes the basic data by the number corresponding to the same data number.

In this embodiment, the number of the communication data having the same destination and the same data contents is counted among all the communication data in the communication data table, and the counted value information is transmitted. Alternatively, in light of the processing load, it is possible to compare the destination and the data contents from the leading communication data successively to count the number of the communication data having the same destination and the same data contents with respect to the communication data to be processed, to transmit the counted value information, and to transmit the communication data whose destination is the same but whose data contents is different with respect to the communication data to be processed.

In this embodiment, in the case where the counted same data number information is transmitted, merely the value of the same data number is transmitted. Alternatively, in the case where the user wishes to sequentially transmit communication data having the same data contents to the same destination at a certain time interval for a specific purpose, received time interval information concerning the communication data may be transmitted along with the same data number information as sequential data.

In the above altered arrangement, the router device 1 in the fifth embodiment may further include a timer section 18 corresponding to the timer section 18 in the third embodiment, and the timer section 18 may measure the time when the communication data has been received, and store received time information representing the received time in association with the received communication data. Then, the communication data transmission controlling section 15 may acquire the respective received time information concerning the communication data having the same data contents, and obtain received time interval information representing a time interval of receiving the respective communication data.

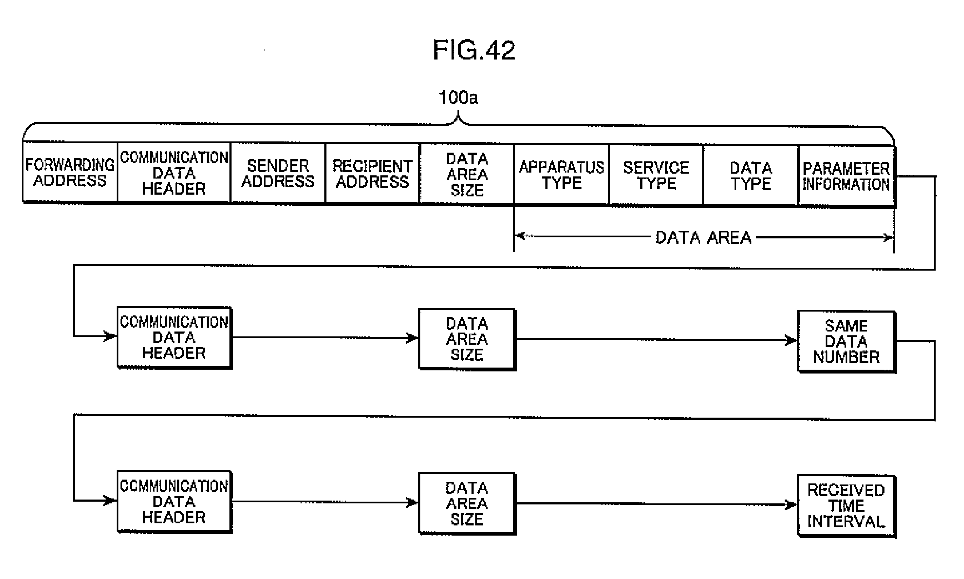

FIG. 42 is an illustration showing an example of a data construction of communication data in the case where the received time interval information concerning the communication data having the same data contents is transmitted along with the same data number information. As shown in FIG. 42, in the case where the received time interval information concerning the communication data having the same data contents is transmitted along with the same data number information, the communication data header information, the data area size information and the same data number information are transmitted sequentially after the first communication data 100a, and then, the communication data header information, the data area size information, and the received time interval information are transmitted sequentially after the same data number information. The received time interval information is transmitted sequentially by the number corresponding to the same data number.

In the above case, the communication data header includes information for discriminating whether the recipient address is a single address or a multiple address, a hop counter value for routing, information for discriminating whether the data area represents single basic data or complex data, information for discriminating whether the data area is constituted solely of the same data number information, and information for discriminating whether the data area is merely constituted of the received time interval information. In the case where the data construction of the communication data is as shown in FIG. 4, transmission of the data area size information may be omitted.

### (Sixth Embodiment)

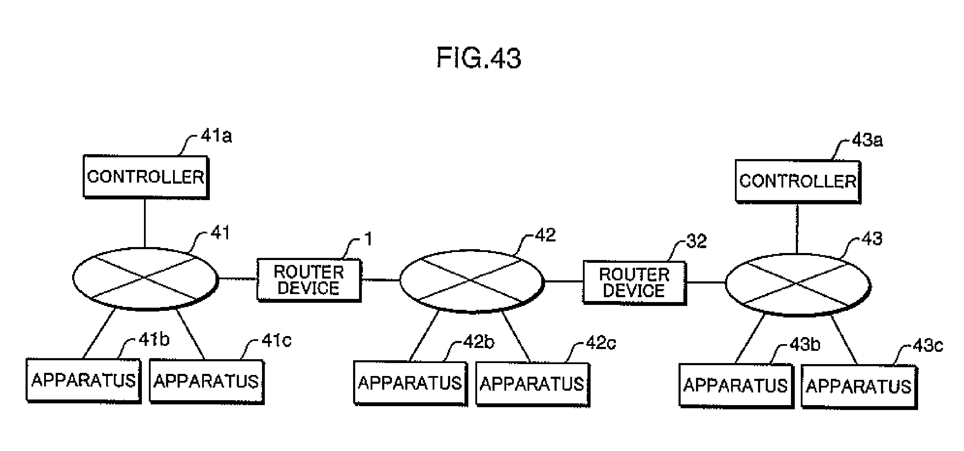

Now, a sixth embodiment of the invention is described. FIG. 43 is an illustration showing a configuration of a communication network system in the sixth embodiment.

As shown in FIG. 43, a router device 1 is connected to a first subnet 41 and a second subnet 42, and a router device 32 is connected to the second subnet 42 and a third subnet 43. The first subnet 41 is connected to a controller 41a and apparatuses 41b, 41c, the second subnet 42 is connected to apparatuses 42b, 42c, and the third subnet 43 is connected to a controller 43a and apparatuses 43b, 43c. The first subnet 41 and the third subnet 43 are subnets to be connected to a high-speed transmission medium, and the second subnet 42 is a subnet to be connected to a low-speed transmission medium.

The controllers 41a, 43a controls the apparatuses 41b and 41c in the first subnet 41, the apparatuses 42b and 42c in the second subnet 42, and the apparatuses 43b and 43c in the third subnet 43. The apparatuses 41b, 41c, 42b, 42c, 43b, and 43c include household electric appliances such as a refrigerator, a washing machine, an air conditioner, and a microwave oven.

The controller 41a, 43a is required to receive a state change notice or information representing change of instance doss from the respective apparatuses. These information are transmitted from the respective apparatus as the broadcast message (hereinafter, also called as "broadcast communication data"). For instance, in the case where the apparatus 41b transmits a state change notice as the broadcast message, the controller 41a, the apparatus 41c, and the router 1 receive the broadcast message sent from the apparatus 41b. Then, the router device 1 sends the broadcast message sent from the apparatus 41b to the apparatuses 42b and 42c in the second subnet 42 and to the router device 32. Upon receiving the broadcast message, the router device 32 sends the broadcast message originated from the apparatus 41b to the controller 43a, and to the apparatuses 43b and 43c in the third subnet 43.

In this way, the broadcast message sent from the apparatus 41b is received by all the controllers, all the apparatuses, and all the router devices connected on the communication network system. However, there is an apparatus which does not require to receive the broadcast message among the apparatuses. In the conventional arrangement, for instance, even if the apparatuses 42b and 42c connected to the second subnet 42 do not require to receive the broadcast message, the router device 1 sends the broadcast message to the apparatuses 42b and 42c connected to the second subnet 42 upon receiving the broadcast message from the first subnet 41. According to the conventional arrangement, data transmission to the apparatus which does not require to receive the broadcast message may increase a communications traffic. In particular, in the case where data is transmitted from a high-speed subnet to a low-speed subnet, excessive data may be accumulated in the router device 1.

In view of the above, in the sixth embodiment, the router device for relaying data between the first subnet and the second subnet is designed to send the broadcast message merely to a pre-registered apparatus among the apparatuses connected to the second subnet in the case where the broadcast message is sent from the apparatus in the first subnet.

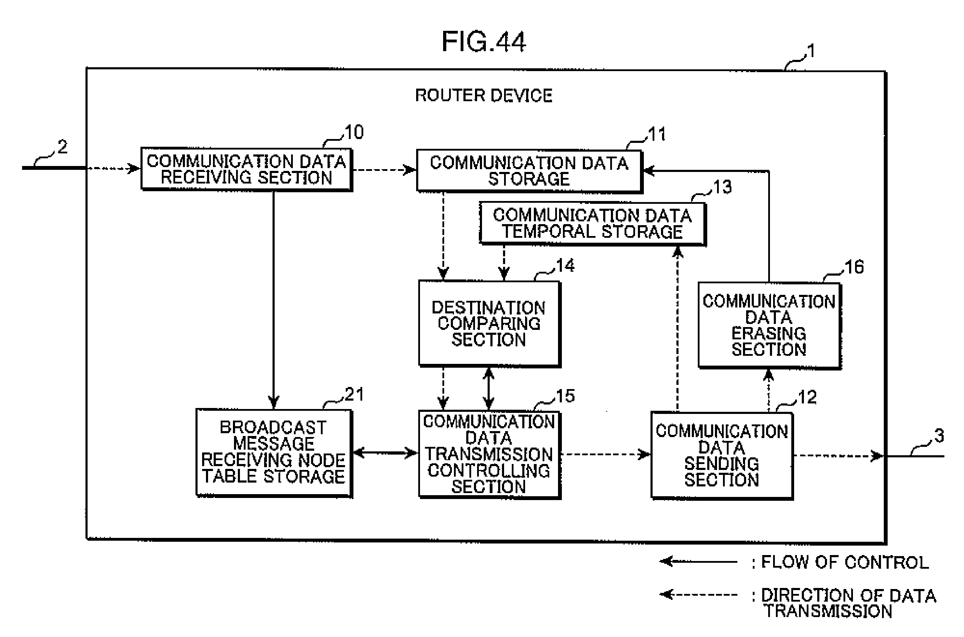

FIG. 44 is an illustration showing an arrangement of the router device in the sixth embodiment. Since the arrangement of the router device 32 is identical to the arrangement of the router device 1, merely the arrangement of the router device 1 is illustrated in FIG. 44. Elements in FIG. 44 which are identical or equivalent to those in FIG. 1 have like reference numerals, and description thereof is omitted herein.

The router device 1 shown in FIG. 44 includes a communication data receiving section 10, a communication data storage 11, a communication data sending section 12, a communication data temporal storage 13, a destination comparing section 14, a communication data transmission controlling section 15, a communication data erasing section 16, and a broadcast message receiving node table storage 21.

The broadcast message receiving node table storage 21 stores therein a broadcast message receiving node table in which all the subnets connected to the router device 1 and nodes which require to receive the broadcast message in the respective subnets are correlated to each other. In this embodiment, the broadcast message receiving node table storage 21 corresponds to an example of broadcast message receiving registering means. In this embodiment, the controller, the apparatus, and the router device connected to the subnet are generally called as "node".

In the case where communication data is transmitted, the communication data transmission controlling section 15 refers to information for discriminating whether the recipient address included in the communication data header of the communication data is a single address or a multiple address. If the communication data is to be transmitted to a multiple address, the communication data transmission controlling section 15 refers to the broadcast message receiving node table stored in the broadcast message receiving node table storage 21. The communication data transmission controlling section 15 sends the communication data merely to the node(s) registered in the broadcast message receiving node table.

When the power sources of the respective nodes are turned on, information for discriminating whether the respective nodes require to receive the broadcast message is sent to all the router devices connected to the same subnet. Upon receiving the information for discriminating whether receiving of the broadcast message is required, the router devices register all the nodes which require to receive the broadcast message in the broadcast message receiving node table.

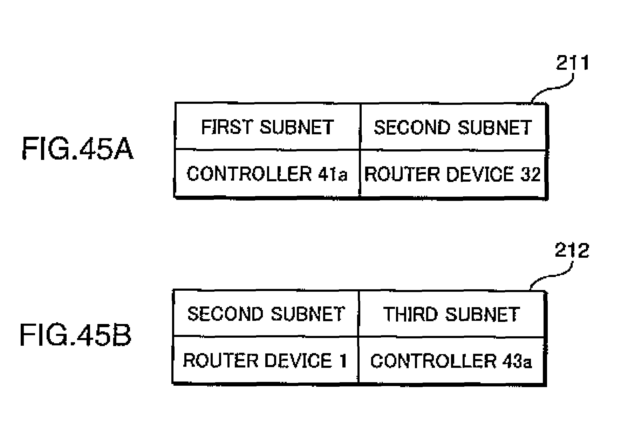

FIGS. 45A and 45B are illustrations showing examples of the broadcast message receiving node table stored in the broadcast message receiving node table storage. FIG. 45A is an illustration showing an example of the broadcast message receiving node table stored in the broadcast message receiving node table storage of the router device 1, and FIG. 45B is an illustration showing an example of the broadcast message receiving node table stored in the broadcast message receiving node table storage of the router device 32.

As shown in FIG. 45A, the broadcast message receiving node table storage 21 of the router device 1 stores therein a broadcast message receiving node table 211 in which the first subnet 41 and the controller 41a are correlated to each other, and the second subnet 42 and the router device 32 are correlated to each other.

Likewise, as shown in FIG. 45B, the broadcast message receiving node table storage 21 of the router device 32 stores therein a broadcast message receiving node table 212 in which the second subnet 42 and the router device 1 are correlated to each other, and the third subnet 43 and the controller 43a are correlated to each other.

In the case where the broadcast communication data sent from the first subnet 41 is to be sent to the second subnet 42, the communication data transmission controlling section 15 of the router device 1 refers to the column of the second subnet 42 in the broadcast message receiving node table 211, and sends the broadcast communication data merely to the router device 32 which is registered as a node for receiving the broadcast communication data in the second subnet 42. In the case where the communication data sent from the second subnet 42 is to be sent to the third subnet 43, the communication data transmission controlling section 15 of the router device 32 refers to the column of the third subnet 43 in the broadcast message receiving node table 212, and sends the broadcast communication data merely to the controller 43a which is registered as a node for receiving the broadcast communication data in the third subnet 43.

In this way, in the case where the broadcast communication data which is to be sent to a multiple node is sent from the first subnet 41, the broadcast communication data is transmitted merely to the node that is pre-registered as a node which is required to receive the broadcast communication data, in place of sending the broadcast communication data to all the nodes connected to the second subnet 42. This arrangement enables to reduce a communications traffic on the communication network system.

### (Summary of Embodiments)

The aforementioned embodiments primarily include the invention having the following arrangements.

An aspect of the invention is directed to a router device for relaying data between a first network and a second network. The router device comprises: communication data receiving means for receiving communication data including at least one address of a destination from the first network; communication data storing means for storing therein the at least one communication data received by the communication data receiving means; communication data sending means for sending the communication data to the second network; communication data temporal storing means for temporarily storing therein the communication data sent to the second network by the communication data sending means; destination comparing means for comparing the destination included in the one or more communication data stored in the communication data storing means with the destination included in the communication data stored in the communication data temporal storing means one by one; communication data transmission controlling means for designating the communication data sending means to transmit the communication data stored in the communication data storing means if a comparison result by the destination comparing means indicates destination matching or if no communication data to be compared is stored in the communication data temporal storing means; and communication data erasing means for erasing the transmitted communication data from the communication data storing means in response to sending the communication data to the second network by the communication data sending means.

Another aspect of the invention is directed to a routing method for relaying data between a first network and a second network. The routing method comprises: a communication data receiving step of receiving communication data including at least one address of a destination from the first network; a communication data storing step of storing the at least one communication data received in the communication data receiving step into communication data storing means : a communication data sending step of sending the communication data to the second networks; a communication data temporal storing step of temporarily storing the communication data sent to the second network in the communication data sending step into communication data temporal storing means : a destination comparing step of comparing the destination included in the one or more communication data stored in the communication data storing means with the destination included in the communication data stored in the communication data temporal storing means one by one; a communication data transmission controlling step of designating to transmit the communication data stored in the communication data storing means if a comparison result in the destination comparing step indicates destination matching or if no communication data to be compared is stored in the communication data temporal storing means; and a communication data erasing step of erasing the transmitted communication data from the communication data storing means in response to sending the communication data to the second network in the communication data sending step.

Yet another aspect of the invention is directed to a routing program for relaying data between a first network and a second network. The routing program causing a computer to function as: communication data receiving means for receiving communication data including at least one address of a destination from the first network; communication data storing means for storing therein the at least one communication data received by the communication data receiving step (sic); communication data sending means for sending the communication data to the second network communication data temporal storing means for temporarily storing therein the communication data sent to the second network by the communication data sending means; destination comparing means for comparing the destination included in the one or more communication data stored in the communication data storing means with the destination included in the communication data stored in the communication data temporal storing means one by one; communication data transmission controlling means for designating the communication data sending means to transmit the communication data stored in the communication data storing means if a comparison result by the destination comparing means indicates destination matching or if no communication data to be compared is stored in the communication data temporal storing means; and communication data erasing means for erasing the transmitted communication data from the communication data storing means in response to sending the communication data to the second network by the communication data sending means.

Still another aspect of the invention is directed to a computer-readable recording medium recorded with a routing program for relaying data between a first network and a second network. The routing program causes a computer to function as communication data receiving means for receiving communication data including at least one address of a destination from the first network; communication data storing means for storing therein the at least one communication data received by the communication data receiving step (sic); communication data sending means for sending the communication data to the second network; communication data temporal storing means for temporarily storing therein the communication data sent to the second network by the communication data sending means; destination comparing means for comparing the destination included in the one or more communication data stored in the communication data storing means with the destination included in the communication data stored in the communication data temporal storing means one by one; communication data transmission controlling means for designating the communication data sending means to transmit the communication data stored in the communication data storing means if a comparison result by the destination comparing means indicates destination matching or if no communication data to be compared is stored in the communication data temporal storing means; and communication data erasing means for erasing the transmitted communication data from the communication data storing means in response to sending the communication data to the second network by the communication data sending means.

According to the above arrangements, the communication data receiving means receives the communication data including the at least one address of the destination from the first network. The received at least one communication data is stored in the communication data storing means. The communication data is sent to the second network, and then is temporarily stored in the communication data temporal storing means. The destination included in the one or more communication data stored in the communication data storing means is compared with the destination included in the communication data stored in the communication data temporal storing means one by one. If the comparison result indicates destination matching or if no communication data to be compared is stored in the communication data temporal storing means, to transmit the communication data stored in the communication data storing means is designated to the communication data sending means. Then, the transmitted communication data is erased from the communication data storing means in response to sending the communication data to the second network.

In the above arrangement, since the communication data having the same destination are sequentially transmitted, establishing and releasing of a communication link which is carried out before and after the communication for each of the destinations, and a carrier sensing operation of checking whether the other communication is being performed prior to sending the communication data can be obviated. Also, a processing overhead for each of the destinations can be reduced, thereby accomplishing improved communication efficiency.

Preferably, in the above router device, the communication data transmission controlling means may repeat a processing of designating the communication data sending means to transmit the communication data stored in the communication data storing means until no communication data is stored in the communication data storing means if the comparison result by the destination comparing means indicates destination matching or if no communication data to be compared is stored in the communication data temporal storing means.

With the above arrangement, if the comparison result by the destination comparing means indicates destination matching or if no communication data to be compared is stored in the communication data temporal storing means, the processing of designating the communication data sending means to transmit the communication data stored in the communication data storing means is repeated until no communication data is stored in the communication data storing means. This arrangement enables to securely send the communication data from the first network to the second network.

Preferably, the router device may further comprise basic data number counting means for counting the number of basic data included in the communication data received by the communication data receiving means, the basic data representing processing contents, wherein the communication data receiving means includes basic data number information representing the number of basic data counted by the basic data number counting means in the received communication data.

With the above arrangement, the number of the basic data representing the processing contents, which is included in the communication data, is counted, and the basic data number information representing the counted number of the basic data is included in the communication data, Accordingly, if a sender wishes to send complex data for a specific purpose, the receiver can judge whether the communication data is complex data or individual communication data that have been sequentially transmitted by the router device by interpreting the basic data number information included in the communication data, and acquire communication protocol information as intended by the sender.

Preferably, the router device may further comprise received time measuring means for measuring a time when the communication data has been received by the communication data receiving means, wherein the communication data receiving means acquires received time information representing the received time measured by the received time measuring means, and includes the acquired received time information in the received communication data in response to receiving the communication data from the first network.

With the above arrangement, the time when the communication data has been received by the communication data receiving means is measured and the revived time information is included in the communication data in response to receiving the communication data from the first network. Accordingly, in the case where the sender wishes to send communication data with a certain time interval for a specific purpose, the receiver can judge whether the communication data has been sent with the certain time interval for the specific purpose, or sequentially sent by the router device by interpreting the received time information included in the communication data, and acquire communication protocol information as intended by the sender.

Preferably, in the router device, the communication data may include data type information representing a type of control, and parameter information representing setting contents in association with the data type information, and the router device may further include data type comparing means for comparing the data type information included in the communication data stored in the communication data storing means with the data type information included in the communication data stored in the communication data temporal storing means, and the communication data transmission controlling means may extract the parameter information included in the communication data stored in the communication data storing means and designate the communication data sending means to transmit the extracted parameter Information as the communication data if a comparison result by the destination comparing means indicates destination matching and if a comparison result by the data type comparing means indicates data type matching.

With the above arrangement, the communication data includes the data type information representing a type of control and the parameter information representing setting contents in association with the data type information. The data type information included in the communication data stored in the communication data storing means is compared with the data type information included in the communication data stored in the communication data temporal storing means. In the case where the comparison result by the destination comparing means indicates matching between the destination included in the communication data stored in the communication data storing means and the destination included in the communication data stored in the communication data temporal storing means, and if the comparison result by the data type comparing means indicates matching between the data type information included in the communication data stored in the communication data storing means and the data type information included in the communication data stored in the communication data temporal storing means, the parameter information included in the communication data stored in the communication data storing means is extracted, and to transmit the extracted parameter information is designated to the communication data sending means as the communication data.

In the arrangement in the case where the destination and the data type information of the targeted communication to be transmitted, and the destination and the data type information of the previously transmitted communication data are identical to each other, merely the parameter information which are different from each other are sequentially transmitted, without transmitting the remaining parts identical to each other except for the parameter information. This arrangement enables to reduce a processing load to the router device, and a traffic of the transmission medium.

Preferably, the router device may further comprise data contents comparing means for comparing data contents of the communication data stored in the communication data storing means with data contents of the communication data stored in the communication data temporal storing means, wherein the communication data transmission controlling means counts the number of communication data having the same destination and the same data contents, as a result of comparison by the destination comparing means and as a result of comparison by the data contents comparing means, and designates the communication data sending means to transmit same data number information representing the number of the communication data having the same destination and the same data contents counted by the communication data transmission controlling means.

With the above arrangement, the data contents of the communication data stored in the communication data storing means is compared with the data contents of the communication data stored in the communication data temporal storing means. The number of the communication data having the same destination and the same data contents, as the result of comparison by the destination comparing means between the destination of the communication data stored in the communication data storing means and the destination of the communication data stored in the communication data temporal storing means, and as the result of comparison by the data contents comparing means between the data contents of the communication data stored in the communication data storing means and the data contents of the communication data stored in the communication data temporal storing means, is counted, and to transmit the same data number information is designated to the communication data sending means.

With this arrangement, solely the same data number information representing the number of the communication data to be sequentially transmitted is transmitted to the transmission medium, in place of repetitively transmitting the communication data having the same contents to the transmission medium. This arrangement enables to reduce a communications traffic to a subnet to which the communication data is to be sent, and to reduce a communication load to the network.

Preferably, in the router device, a transmission rate of a transmission medium of the first network may be higher than a transmission rate of a transmission medium of the second network.

With the above arrangement, since the transmission rate of the transmission medium of the first network is higher than the transmission rate of the transmission medium of the second network, even if plural communication data are sent from the first network in a short period, and transmission of the communication data to the second network having the transmission rate lower than the transmission rate of the first network cannot keep up with the transmission from the first network, which may result in excessive accumulation of communication data in the router device, improved communication efficiency can be secured because the communication data having the same destination are sequentially transmitted to the destination, This arrangement enables to suppress excessive accumulation of the communication data in the router device.

Preferably, the router device may further comprise broadcast message receiving registering means for pre-registering an apparatus which is required to receive the communication data as a broadcast message among the apparatuses connected to the first network and the second network, wherein the communication data sending means sends the communication data solely to the apparatus which is connected to the second network and is pre-registered by the broadcast message receiving registering means if the communication data transmitted from the first network and received by the communication data receiving means is judged to be the broadcast message.

With the above arrangement, the apparatus which is required to receive the broadcast message is pre-registered among the apparatuses connected to the first network and the second network. In the case where the communication data transmitted from the first network is judged to be the broadcast message, the communication data is transmitted solely to the apparatus which is connected to the second network and is pre-registered by the broadcast message receiving registering means.

In the above arrangement, in the case where the broadcast message is sent from the first network as the communication data, the communication data is transmitted solely to the apparatus that is pre-registered as the apparatus which is required to receive the communication data as the broadcast message, in place of transmitting the broadcast message to all the apparatuses connected to the second network. This arrangement enables to reduce the communications traffic.

A novel communication device to be connected to a second network which is connected to a first network via a router device comprises : recipient communication data receiving means for receiving communication data sent from the router device among communication data sent from the first network, the router device being adapted to sequentially send the communication data having the same destination to the second network; and recipient communication data storing means for storing therein the at least one communication data received by the recipient communication data receiving means.

With the above arrangement, the communication data sent from the router device, which is adapted to sequentially send the communication data having the same destination to the second network, is received by the recipient communication data receiving means among the communication data sent from the first network, and the at least one communication data is stored in the recipient communication data storing means. Since the communication data having the same destination are sequentially transmitted to the destination, establishing and releasing of a communication link to be implemented before and after the communication for each of the destinations, and a carrier sensing operation of checking whether the other communication is being conducted before sending the communication data can be obviated, and a processing overhead for each of the destinations can be reduced, thereby accomplishing improved communication efficiency.

Preferably, the communication device may further comprise basic data analysing means for analyzing basic data included in the received communication data individually, the basic data representing processing contents, if the recipient communication data receiving means sequentially receives the two or more communication data, wherein the recipient communication data receiving means divides the communication data sent from the router device into two or more basic data based on an analysis result by the basic data analyzing means.

With the above arrangement in the case where two or more communication data are sequentially received, the basic data analyzing means analyzes the basic data representing the processing contents, which is included in the received communication data, individually. Then, the communication data sent from the router device is divided into two or more basic data based on the analysis result by the basic data analyzing means. If the two or more communication data are sequentially received, this arrangement enables to analyze the basic data included in the communication data individually and to execute a processing based on the respective basic data.

Preferably, in the communication device, the router device may send basic data number information representing the number of basic data by including the basic data number information in the communication data, and the recipient communication data receiving means may interpret that the basic data is single basic data if the basic data number information included in the received communication data represents 1, and interpret that the basic data is complex data constituted of the basic data of the number corresponding to the basic data number if the basic data number information included in the communication data represents 2 or more.

With the above arrangement, the basic data number information representing the number of the basic data included in the communication data is transmitted by the router device. The basic data is judged to be single basic data if the basic data number information included in the communication data represents 1, and the basic data is judged to be complex data constituted of the basic data of the number corresponding to the basic data number if the basic data number information included in the communication data represents 2 or more.

The above arrangement enables to recognize whether the received communication data includes the single basic data or the complex data constituted of plural basic data by referring to the basic data number information included in the communication data.

Preferably, in the communication device, the router device may send the communication data including one basic data having parameter information, and the at least one parameter information, and the recipient communication data receiving means may copy the basic data by the number corresponding to the number of the parameter information, replace the parameter information included in the copied basic data with the received parameter information, and interpret that the communication data includes the leading basic data and the basic data of the number corresponding to the number of the received parameter information if the received communication data includes the one basic data, and the at least one parameter information.

With the above arrangement, in the case where the communication data sent from the router device includes the one basic data, and the at least one parameter information, the basic data is copied by the number corresponding to the number of the parameter information, the parameter information included in the copied basic data is replaced by the received parameter information, and it is interpreted that the communication data includes the leading basic data and the basic data of the number corresponding to the number of the received parameter information.

In the above arrangement, even if merely the parameter information is sent from the router device to reduce the communications traffic, the communication device can generate the basic data including the parameter information by copying the leading basic data by the number corresponding to the number of the parameter information.

Preferably, in the communication device, the router device may send the communication data including one basic data having data type information representing a type of control and parameter information representing setting contents in association with the data type information, and the at last one parameter information, and the recipient communication data receiving means may interpret that the received communication data includes the leading basic data, and interpret that the communication data including the data type information identical to the data type information of the leading basic data, and the parameter information different from the parameter information of the leading basic data has been received by the number corresponding to the number of the parameter information if the received communication data includes the one basic data, and the at least one parameter information.

With the above arrangement, the communication data including the one basic data having the data type information representing a type of control and parameter information representing setting contents in association with the data type information, and the at last one parameter information is sent from the router device. In the case where the received communication includes the one basic data, and the at least one parameter information, it is interpreted that the received communication data includes the leading basic data, and that the communication data including the data type information identical to the data type information of the leading basic data and the parameter information different from the parameter information of the leading basic data has been received by the number corresponding to the number of the parameter information.

In the above arrangement, even if merely the parameter information is sent from the router device to reduce the communications traffic, the communication device can interpret that the communication data including the data type information identical to the data type information of the leading basic data and the parameter information different from the parameter information of the leading basic data has been received by the number corresponding to the number of the parameter information.

Preferably, in the communication device, the route device may send the communication data including basic data, and same data number information representing the number of the communication data having data contents identical to each other, and the recipient communication data receiving means may copy the basic data by the number corresponding to the same data number, and interpret the basic data individually if the received communication data includes the basic data and the same data number information.

With the above arrangement, the communication data including the basic data, and the same data number information representing the number of the communication data having data contents identical to each other is sent from the router device. In the case where the received communication data includes the basic data and the same data number information, the basic data is copied by the number corresponding to the same data number, and the basic data is interpreted individually.

In the above arrangement, even if merely the same data number information representing the number of the communication data having the same data contents is transmitted from the router device to reduce the communications traffic, the communication device can generate the basic data having the same data contents by copying the leading basic data by the number corresponding to the same data number.

Preferably, in the communication device, the router device may send the communication data including basic data, and same data number information representing the number of the communication data having data contents identical to each other, and the recipient communication data receiving means may interpret that the basic data of the number corresponding to the same data number is received if the received communication data includes the basic data and the same data number information.

With the above arrangement, the communication data including the basic data, and the same data number information representing the number of the communication data having data contents identical to each other is sent from the router device. In the case where the received communication data includes the basic data and the same data number information, it is interpreted that the basic data has been received by the number corresponding to the same data number.

In the above arrangement, even if merely the same data number information representing the number of the communication data having the same data contents is transmitted from the router device to reduce the communications traffic, the communication device can interpret that the basic data corresponding to the leading basic data has been received by the number corresponding to the same data number.

Preferably, in the communication device, the router device may send the communication data including received time information representing a time when the router device has received the communication data, and the communication device may further include received time analyzing means for analyzing the received time information if the communication data received by the communication data receiving means includes the received time information.

With the above arrangement, the communication data including the received time information representing the time when the router device has received the communication data is sent from the router device. In the case where the communication data includes the received time information, the received time information is analyzed by the received time analysing means. In this arrangement, even if the communication data having the same destination are sequentially transmitted to the same destination, the communication device can know the time interval of the data transmission by analyzing the received time information representing the time when the router device has received the respective communication data.

### EXPLOITATION IN INDUSTRY

The router device, the communication device, the routing method, the routing program, and the computer-readable recording medium recorded with the routing program of the invention is advantageous in reducing a communications traffic in data transmission from a subnet connected to a transmission medium having a highs-peed transmission rate to a subnet connected to a transmission medium having a low-speed transmission rate, and is useful in control of household electric appliances, control of illumination devices, control of air conditioners, and control of a like device on a home network using transmission media having different transmission rates. Also, the invention is applicable to commercial equipment control, illumination control, air conditioning control, or control of a like device in an office building management system or an office building energy management system.

## Claims

1. A router device for relaying data between a first network and a second network, the router device comprising:
communication data receiving means for receiving communication data including at least one address of a destination from the first network:
communication data storing means for storing therein the at least one communication data received by the communication data receiving means;
communication data sending means for sending the communication data to the second network ;
communication data temporal storing means for temporarily storing therein the communication data sent to the second network by the communication data sending means;
destination comparing means for comparing the destination included in the one or more communication data stored in the communication data storing means with the destination included in the communication data stored in the communication data temporal storing means one by one;
communication data transmission controlling means for designating the communication data sending means to transmit the communication data stored in the communication data storing means if a comparison result by the destination comparing means indicates destination matching or if no communication data to be compared is stored in the communication data temporal storing means; and
communication data erasing means for erasing the transmitted communication data from the communication data storing means in response to sending the communication data to the second network by the communication data sending means.

2. The router device according to claim 1, wherein
the communication data transmission controlling means repeats a processing of designating the communication data sending means to transmit the communication data stored in the communication data storing means until no communication data is stored in the communication data storing moans if the comparison result by the destination comparing means indicates destination matching or if no communication data to be compared is stored in the communication data temporal storing means.

3. The router device according to claim 1 or 2, further comprising basic data number counting means for counting the number of basic data included in the communication data received by the communication data receiving means, the basic data representing processing contents, wherein
the communication data receiving means includes basic data number information representing the number of basic data counted by the basic data number counting means in the received communication data.

4. The router device according to any one of claims 1 through 3, further comprising received time measuring means for measuring a time when the communication data has been received by the communication data receiving means, wherein
the communication data receiving means acquires received time information representing the received time measured by the received time measuring means, and includes the acquired received time information in the received communication data in response to receiving the communication data from the first network.

5. The router device according to any one of claims 1 through 4, wherein
the communication data includes data type information representing a type of control, and parameter information representing setting contents in association with the data type information,
the router device further includes data type comparing means for comparing the data type information included in the communication data stored in the communication data storing means with the data type information included in the communication data stored in the communication data temporal storing means, and
the communication data transmission controlling means extracts the parameter information included in the communication data stored in the communication data storing means and designates the communication data sending means to transmit the extracted parameter information as the communication data if a comparison result by the destination comparing means indicates destination matching and if a comparison result by the data type comparing means indicates data type matching.

6. The router device according to any one of claims 1 through 5, further comprising data contents comparing means for comparing data contents of the communication data stored in the communication data storing means with data contents of the communication data stored in the communication data temporal storing means, wherein
the communication data transmission controlling means counts the number of communication data having the same destination and the same data contents, as a result of comparison by the destination comparing means and as a result of comparison by the data contents comparing means, and designates the communication data sending means to transmit same data number information representing the number of the communication data having the same destination and the same data contents counted by the communication data transmission controlling means.

7. The router device according to any one of claims 1 through 6, wherein a transmission rate of a transmission medium of the first network is higher than a transmission rate of a transmission medium of the second network.

8. The router device according to claim 1. further comprising broadcast message receiving registering means for pre-registering an apparatus which is required to receive the communication data as a broadcast message among the apparatuses connected to the first network and the second network, wherein
the communication data sending means sends the communication data solely to the apparatus which is connected to the second network and is pre-registered by the broadcast message receiving registering means if the communication data transmitted from the first network and received by the communication data receiving means isjudged to be the broadcast message.

9. A communication device to be connected to a second network which is connected to a first network via a router device, the communication device comprising:
recipient communication data receiving means for receiving communication data sent from the router device among communication data sent from the first network, the router device being adapted to sequentially send the communication data having the same destination to the second network and
recipient communication data storing means for storing therein the at least one communication data received by the recipient communication data receiving means.

10. The communication device according to claim 9, further comprising
basic data analyzing means for analyzing basic data included in the received communication data individually, the basic data representing processing contents, if the recipient communication data receiving means sequentially receives the two or more communication data, wherein
the recipient communication data receiving means divides the communication data sent from the router device into two or more basic data based on an analysis result by the basic data analyzing means.

11. The communication device according to claim 9 or 10, wherein
the router device sends basic data number information representing the number of basic data by including the basic data number information in the communication data, and
the recipient communication data receiving means interprets that the basic data is single basic data if the basic data number information included in the received communication data represents 1, and interprets that the basic data is complex data constituted of the basic data of the number corresponding to the basic data number if the basic data number information included in the communication data represents 2 or more.

12. The communication device according to any one of claims 9 through 11, wherein
the router device sends the communication data including one basic data having parameter information, and the at least one parameter information, and
the recipient communication data receiving means copies the basic data by the number corresponding to the number of the parameter information, replaces the parameter information included in the copied basic data with the received parameter information, and interprets that the communication data includes the leading basic data and the basic data of the number corresponding to the number of the received parameter information if the received communication data includes the one basic data, and the at least one parameter information.

13. The communication device according to any one of claims 9 through 11, wherein
the router device sends the communication data including data type information representing a type of control, one basic data having parameter information representing setting contents in association with the data type information, and the at last one parameter information, and
the recipient communication data receiving means interprets that the received communication data includes the leading basic data, and interprets that the communication data including the data type information identical to the data type information of the leading basic data, and the parameter information different from the parameter information of the leading basic data has been received by the number corresponding to the number of the parameter information if the received communication data includes the one basic data, and the at least one parameter information.

14. The communication device according to any one of claims 9 through 13, wherein
the router device sends the communication data including basic data, and same data number information representing the number of the communication data having data contents identical to each other, and
the recipient communication data receiving means copies the basic data by the number corresponding to the same data number, and interprets the basic data individually if the received communication data includes the basic data and the same data number information.

15. The communication device according to any one of claims 9 through 13, wherein
the router device sends the communication data including basic data, and same data number information representing the number of the communication data having data contents identical to each other, and
the recipient communication data receiving means interprets that the basic data of the number corresponding to the same data number is received if the received communication data includes the basic data and the same data number information.

16. The communication device according to any one of claims 9 through 15, wherein
the router device sends the communication data including received time information representing a time when the router device has received the communication data, and
the communication device further includes received time analyzing means for analyzing the received time information if the communication data received by the communication data receiving means includes the received time information.

17. A routing method for relaying data between a first network and a second network, the routing method comprising:
a communication data receiving step of receiving communication data including at least one address of a destination from the first network:
a communication data storing step of storing the at least one communication data received in the communication data receiving step into communication data storing means:
a communication data sending step of sending the communication data to the second network:
a communication data temporal storing step of temporarily storing the communication data sent to the second network in the communication data sending step into communication data temporal storing means;
a destination comparing step of comparing the destination included in the one or more communication data stored in the communication data storing means with the destination included in the communication data stored in the communication data temporal storing means one by one;
a communication data transmission controlling step of designating to transmit the communication data stored in the communication data storing means if a comparison result in the destination comparing step indicates destination matching or if no communication data to be compared is stored in the communication data temporal storing means ; and
a communication data erasing step of erasing the transmitted communication data from the communication data storing means in response to sending the communication data to the second network in the communication data sending step.

18. A routing program for relaying data between a first network and a second network, the routing program causing a computer to function as:
communication data receiving means for receiving communication data including at least one address of a destination from the first network;
communication data storing means for storing therein the at least one communication data received by the communication data receiving step (sic);
communication data sending means for sending the communication data to the second network;
communication data temporal storing means for temporarily storing therein the communication data sent to the second network by the communication data sending means;
destination comparing means for comparing the destination included in the one or more communication data stored in the communication data storing means with the destination included in the communication data stored in the communication data temporal storing means one by one;
communication data transmission controlling means for designating the communication data sending means to transmit the communication data stored in the communication data storing means if a comparison result by the destination comparing means indicates destination matching or if no communication data to be compared is stored in the communication data temporal storing means; and
communication data erasing means for erasing the transmitted communication data from the communication data storing means in response to sending the communication data to the second network by the communication data sending means.

19. A computer-readable recording medium recorded with a routing program for relaying data between a first network and a second network, the muting program causing a computer to function as
communication data receiving means for receiving communication data including at least one address of a destination from the first network;
communication data storing means for storing therein the at least one communication data received by the communication data receiving step (sic) ;
communication data sending means for sending the communication data to the second network ;
communication data temporal storing means for temporarily storing therein the communication data sent to the second network by the communication data sending means ;
destination comparing means for comparing the destination included in the one or more communication data stored in the communication data storing means with the destination included in the communication data stored in the communication data temporal storing means one by one;
communication data transmission controlling means for designating the communication data sending means to transmit the communication data stored in the communication data storing means if a comparison result by the destination comparing means indicates destination matching or if no communication data to be compared is stored in the communication data temporal storing means; and
communication data erasing means for erasing the transmitted communication data from the communication data storing means in response to sending the communication data to the second network by the communication data sending means.
